# EUROPEAN PATENT SPECIFICATION

(11) **EP 1 827 806 B1**
(45) Date of publication and mention of the grant of the patent: **19.03.2008**
(21) Application number: 04806863.9
(22) Date of filing: 16.12.2004
(51) Int. Cl.: B29D 30/20, B29D 30/08

(54) **METHOD AND PLANT FOR MANUFACTURING TYRES FOR VEHICLE WHEELS**
VERFAHREN UND ANLAGE ZUR HERSTELLUNG VON REIFEN FÜR FAHRZEUGRÄDER
MÉTHODE ET ÉQUIPEMENTS POUR LA FABRICATION DE PNEUMATIQUES POUR ROUES DE VÉHICULES

(43) Date of publication of application: 05.09.2007
(73) Proprietor: PIRELLI TYRE S.p.A., 20126 Milano (IT)
(72) Inventor: MANCINI, Gianni,, 20126 Milano (IT)
(74) Representative: Bottero, Claudio
(86) International application number: PCT/IT2004/000698
(87) International publication number: WO 2006/064524

(56) References cited:
- EP-A- 0 256 962
- EP-A- 0 580 142
- EP-A- 1 295 708
- WO-A-98/12043
- US-A- 4 531 561
- US-A- 4 985 100
- PATENT ABSTRACTS OF JAPAN vol. 2000, no. 15, 6 April 2001 (2001-04-06) -& JP 2000 351164 A (SUMITOMO RUBBER IND LTD), 19 December 2000 (2000-12-19)

## Description

### Background of the invention

The present invention relates to a method for manufacturing tyres for vehicle wheels.

The invention also pertains to a plant for manufacturing vehicle tyres, which may be employed to carry out the above mentioned manufacturing method, as well as to a plant for making tyres for vehicle wheels.

### Prior art

A tyre for vehicle wheels generally comprises a carcass structure including at least one carcass ply having respectively opposite end flaps turned up loop-wise around annular anchoring structures, each of said anchoring structures being usually made up of a substantially circumferential annular insert onto which at least one filling insert is applied, at a radially external position thereof.

A belt structure comprising one or more belt layers, having textile or metallic reinforcing cords arranged at radial superposed relationship with each other and with the carcass structure, is associated to the latter. A tread band, made of elastomeric material like other semifinished products which constitute the tyre, is applied to the belt structure at a radially external position thereof.

Within the framework of the present description and in the following claims, the term "elastomeric material" is used to indicate a composition comprising at least one elastomeric polymer and at least one reinforcing filler. Preferably, such composition further comprises additives such as, for example, a cross-linking agent and/or a plasticizer. Thanks to the presence of the cross-linking agent, such material can be cross-linked by heating, so as to form the end product.

In addition respective sidewalls of elastomeric material are also applied to the side surfaces of the carcass structure, each of them extending from one of the side edges of the tread band up to the respective annular anchoring structure at the beads, which sidewalls, depending on the different embodiments, can exhibit respective radially outer end edges either superposed on the side edges of the tread band so as to form a design scheme of the type usually referred to as "overlying sidewalls", or interposed between the carcass structure and the side edges of the tread band itself, in accordance with a design scheme of the type referred to as "underlying sidewalls".

In most of the conventional processes for tyre manufacture, it is provided that the carcass structure and the belt structure together with the respective tread band are made separately of each other in respective work stations, so as to be mutually assembled at a later time (see, for example document US 4,531,561).

More particularly, the building of the carcass structure is carried out in a building station, and it first contemplates the deposition of the carcass ply or plies on a first drum usually identified as "building drum" to form a substantially cylindrical sleeve. The annular anchoring structures at the beads are fitted or formed on the opposite end flaps of the carcass ply or plies which in turn are turned up around the annular structures themselves so as to enclose them in a sort of loop.

Simultaneously, in a finishing station provided with a second drum generally indicated with the term of: auxiliary drum, an outer sleeve is manufactured, which is substantially cylindrical as well, which comprises the belt layers laid down in radially superposed relationship with each other, and the tread band applied to the belt layers at a radially outer position thereof.

The outer sleeve is then picked up from the auxiliary drum to be coupled with the carcass sleeve. To this end, the outer sleeve is arranged in coaxial relation around the carcass sleeve, and then the carcass ply or plies are shaped into a toroidal conformation by axially moving the beads close to each other and simultaneously admitting fluid under pressure into the carcass sleeve, so as to determine the application of the belt/tread band sleeve to the carcass structure of the tyre at a radially outer position thereof.

Assembling of the carcass sleeve with the outer sleeve can be carried out on the same drum used for building the carcass sleeve, in which case reference is made to a "unistage manufacturing process". A manufacturing process of this type is described in document US 3,990, 931, for example.

Alternatively, assembling may be carried out on a so-called "shaping drum" onto which the carcass sleeve and outer sleeve are transferred, to manufacture the tyre according to a so-called "two-stage manufacturing process", as described in document EP 0 613 757, for example.

In conventional manufacturing methods the tread band is usually made of a continuously-extruded section member that, after being cooled for stabilisation of its geometrical conformation, is stored on suitable benches or reels. The semifinished product in the form of sections or of a continuous strip is then sent to a delivering unit which either picks up the sections or cuts the continuous strip into sections of predetermined length, each section constituting the tread band to be circumferentially applied onto the belt structure of a tyre being manufactured.

In recent times and in order to further improve the mechanical characteristics and the quality of the tyre, it has been proposed to realise the tread band in an alternative way, i.e. by winding a continuous elongated element according to coils arranged side by side directly on the belt structure rather than by winding and cutting to size sections of a continuous strip extruded in advance and stored on benches or in reels.

From the practical point of view, this can be obtained - as described for example in International patent application WO 2004/041521 in the name of the same Applicant - by an assembling process comprising the steps of:
i) positioning a belt structure comprising at least one belt layer on an auxiliary drum;
ii) applying a tread band on the belt structure by winding thereon at least one continuous elongated element of elastomeric material according to contiguous circumferential coils;
iii) picking up a cylindrical sleeve including the belt structure and the tread band from the auxiliary drum to transfer the sleeve to a position coaxially centred with respect to the carcass sleeve.

Such continuous elongated element is obtained *in situ* and forms a plurality of coils the orientation and mutual-overlapping parameters of which are suitably managed so as to control the variations in thickness to be given to the tread band during the manufacture, based on a predetermined deposition scheme preset on an electronic computer, with a considerable increase of the quality characteristics of the tread band, which in turn positively influence the tyre performance and life.

From the production point of view, however, this improvement of the mechanical and quality characteristics of the tyre implies a difficult problem to be solved, namely that of reconciling the productivity (meaning the number of pieces that can be manufactured in a unit of time) of the building station of the carcass structure - which is normally high - with the productivity of the finishing station where the substantially cylindrical sleeve comprising the belt structure and the tread band is manufactured.

The productivity of the finishing station, in fact, is heavily affected by the inherent slowness of the coil winding step of the continuous elongated element of green elastomeric material.

The discrepancy between the productivity of the building station of the carcass structure and that of the finishing station wherein, the belt structure/tread band sleeve is manufactured, turns out to be particularly relevant and disadvantageous in economic terms, especially in unistage manufacturing processes, in particular when the tread band to be formed is provided with two or more portions, such as for example in the case of a base layer radially overlapped by a radially outer layer optionally including two axially aligned portions. More precisely, when the carcass structure built in the building station remains stationary so as not to lose its centring conditions while it awaits to receive the aforementioned sleeve, said wait can continue even for time periods in the order of minutes, due to the manufacture of said portions, a condition which prevents the building of a subsequent carcass structure, thus extending the overall cycle times needed to manufacture a green tyre.

### Problem underlying the invention

The Applicant intends to solve the problem of manufacturing a high quality tyre reconciling the different productivity rates of the building station of the carcass structure and of the finishing station intended to manufacture the substantially cylindrical belt structure/tread band sleeve also in the event that such sleeve includes a tread band including at least two different portions, each obtained by winding coils of a respective continuous elongated element.

### Summary of the invention

According to the present invention, the Applicant has found that great improvements are achieved in terms of overall productivity and quality of the product within the framework of a tyre manufacturing process which provides for the assembly of semifinished products, by adopting the following measures:
- supporting the various semifinished products being realised in the finishing station on at least three auxiliary drums,
- carrying out in the finishing station intended to manufacture the sleeve including the belt structure and the tread band a specific sequence of cyclically repeated production steps and drum positioning steps;
- realising the carcass structure and the tread band (the latter by winding coils of at least one continuous elongated element of green elastomeric material) at at least three working positions defined in different zones of the finishing station, by operating steps carried out at least in part simultaneously with each other.

More particularly, the present invention relates, according to a first aspect thereof, to a method for manufacturing tyres for vehicle wheels comprising the steps of:
a) building in a building station a substantially cylindrical carcass structure comprising at least one carcass ply operatively associated to annular anchoring structures axially spaced apart from each other;
b) manufacturing in a finishing station a substantially cylindrical sleeve comprising a tread band applied at a radially outer position with respect to a belt structure comprising at least one belt layer, said step b) comprising the steps of:
   b1) assembling a first belt structure at a first working position on a first auxiliary drum of the finishing station;
   b2) applying at least one first portion of the tread band at a second working position at a radially outer position with respect to a second belt structure previously assembled on a second auxiliary drum of the finishing station; said application step being carried out by laying down according to a predetermined path at least one continuous elongated element of green elastomeric material at a radially outer position with respect to said second belt structure;
   b3) applying at least one second portion of the tread band at at least one third working position at a radially outer position with respect to a third belt structure assembled on at least one third auxiliary drum of the finishing station; said application step being carried out by laying down according to a predetermined path at least one continuous elongated element of green elastomeric material at a radially outer position with respect to said third belt structure;
   b4) positioning the first auxiliary drum supporting the first belt structure at said second working position;
   b5) positioning the second auxiliary drum supporting the second belt structure and said at least one first portion of the tread band at said third working position;
   b6) positioning said at least one third auxiliary drum supporting the substantially cylindrical sleeve thus obtained at a picking position of the finishing station;
c) transferring said substantially cylindrical sleeve from said picking position of the finishing station at a radially outer position with respect to a carcass structure built in the meantime in the building station;
wherein said steps from b1) to b6) are repeated cyclically;
wherein steps from b1) to b3) are carried out at least in part simultaneously with one another; and
wherein steps from b4) to b6) are carried out at least in part simultaneously with one another.

Preferred features of the manufacturing method according to the invention are defined in the attached dependent claims 2-28 the content of which is herein integrally incorporated by reference.

In accordance with a further aspect of the invention, the above mentioned method can be carried out by means of a plant for manufacturing tyres for vehicle wheels comprising:
a) a building station for building a substantially cylindrical carcass structure comprising at least one carcass ply operatively associated to annular anchoring structures axially spaced apart from each other;
b) a finishing station for manufacturing a substantially cylindrical sleeve comprising a tread band applied at a radially outer position with respect to a belt structure comprising at least one belt layer, said finishing station comprising:
   b1) a first auxiliary drum;
   b2) a second auxiliary drum;
   b3) at least one third auxiliary drum;
   b4) a displacing apparatus adapted to support said auxiliary drums and to position said auxiliary drums at a first working position wherein said belt structure is assembled, at a second working position wherein at least one first portion of the tread band is applied, at least a third working position wherein at least one second portion of the tread band is applied, at a picking position of said substantially cylindrical sleeve; said first, second and at least one third working positions being defined in different zones of the finishing station;
   b5) at least one first delivery member of a continuous elongated element of green elastomeric material arranged at said second working position for operatively interacting with one of said auxiliary drums;
   b6) at least one second delivery member of a continuous elongated element of green elastomeric material arranged at said at least one third working position for operatively interacting with one of said auxiliary drums;
c) at least one transfer device of the substantially cylindrical sleeve manufactured in the finishing station, adapted to operatively interact with one of said auxiliary drums at said picking position for transferring said substantially cylindrical sleeve at a radially outer position with respect to a carcass structure built in the building station.

Preferred features of the manufacturing plant according to the invention are defined in the attached dependent claims 30-45 the content of which is herein integrally incorporated by reference.

According to a further aspect thereof, the invention relates to a plant for making tyres for vehicle wheels, comprising a manufacturing plant as defined above and at least one vulcanisation station for vulcanising the tyres manufactured in said manufacturing plant.

Additional features and advantages of the invention will become more clearly apparent from the detailed description of a preferred, but not exclusive, embodiment of a method and of a plant for manufacturing tyres for vehicle wheels, in accordance with the present invention.

### Brief description of the drawings

Such a description will be set out hereinafter with reference to the accompanying drawings, given by way of indication and not of limitation, wherein:
- Figure 1 is a schematic top view of a first preferred embodiment of a plant for manufacturing tyres in accordance with the present invention;
- Figure 2 is a schematic fragmentary cross-section view of a tyre obtainable in accordance with the method and the plant of the present invention.

### Detailed description of the preferred embodiments

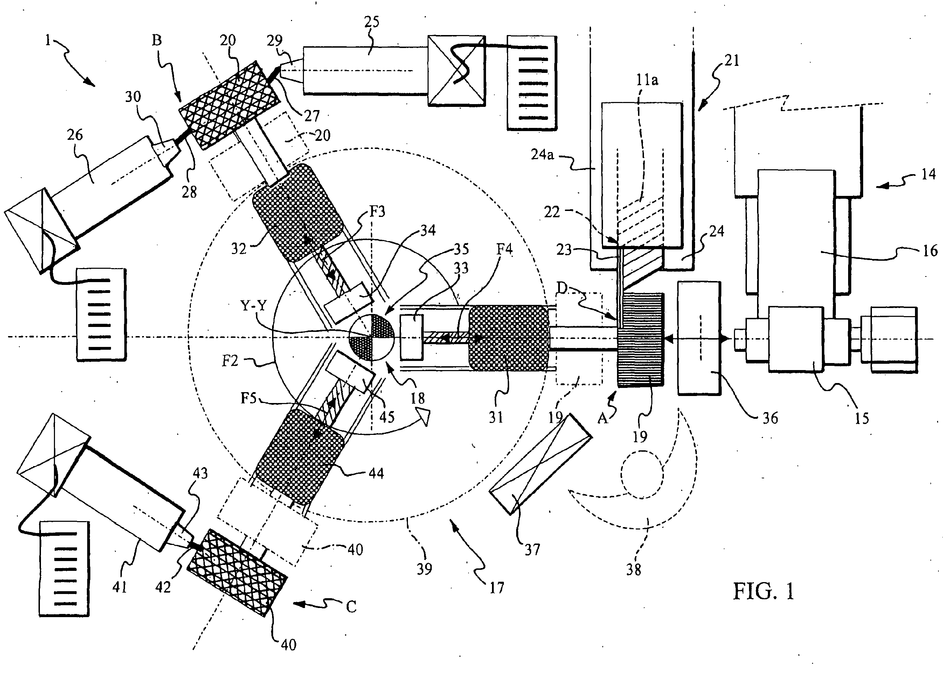

With reference to Figure 1, a plant for manufacturing tyres for vehicle wheels, adapted to carry out a manufacturing method according to a preferred embodiment of the present invention, is generally indicated at 1.

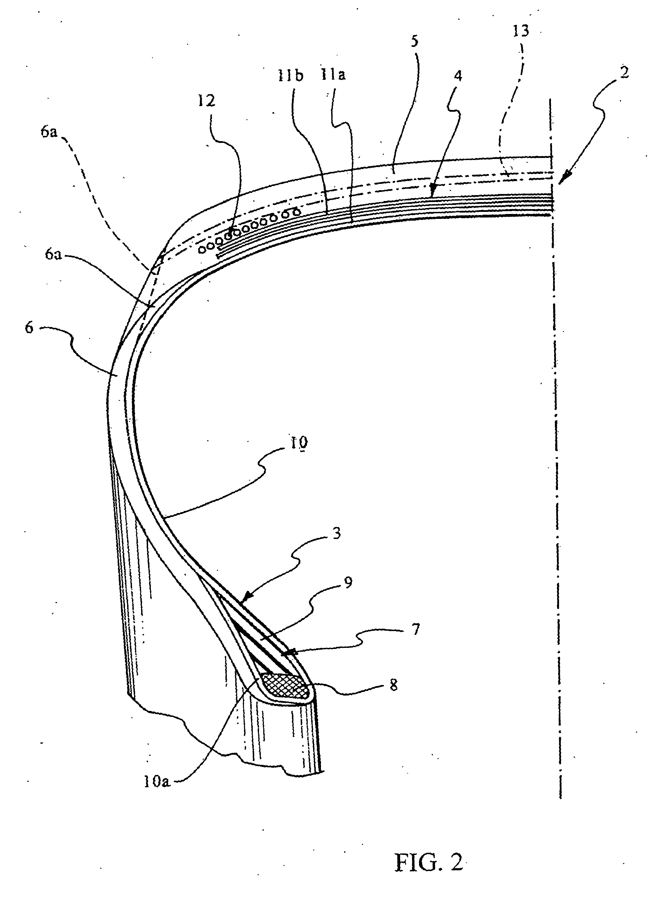

A tyre that can be manufactured by the plant 1 is generally indicated at 2 in Figure 2 and can be a tyre intended to equip the wheels of a car or the wheels of a heavy vehicle.

The tyres 2 essentially comprise a carcass structure 3 having a substantially toroidal conformation, a belt structure 4 having a substantially cylindrical conformation, circumferentially extending around the carcass structure 3, a tread band 5 applied to the belt structure 4 at a radially outer position thereof, and a pair of sidewalls 6 laterally applied, on opposite sides, to the carcass structure 3 and each extending from a side edge of the tread band 5 up to a radially inner edge of the carcass structure 3.

Each sidewall 6 essentially comprises a layer of elastomeric material having a suitable thickness and may have a radially outer end tailpiece 6a at least in part covered by the axial end of the tread band 5, as shown in solid line in Figure 2, according to a construction scheme of the type usually identified as "underlying sidewalls".

Alternatively, the radially outer end tailpieces 6a of the sidewalls 6 can be laterally superposed on the corresponding axial ends of the tread band 5, as shown in dashed line in Figure 2, to realise a construction scheme of the type usually identified as "overlying sidewalls".

The carcass structure 3 comprises a pair of annular anchoring structures 7 integrated in regions usually identified as "beads", each of them being for example made up of a substantially circumferential annular insert 8, usually called "bead core", and carrying an elastomeric filler 9 at a radially outer position thereof. Turned up around each of the annular anchoring structures 7 are the end flaps 10a of one or more carcass plies 10 comprising textile or metallic cords extending transversely with respect to the circumferential development of the tyre 2, possibly according to a predetermined inclination between the two annular anchoring structures 7.

The belt structure 4 comprises in turn at least one belt layer, preferably at least two belt layers 11a, 11b comprising reinforcing cords made of a suitable material, for example metallic or textile cords.

Preferably, said reinforcing cords are suitably inclined with respect to the circumferential development of the tyre 2, according to respectively crossed orientations between one belt layer and the other.

In a preferred embodiment, the belt structure 4 further comprises at least one belt layer 12 at a radially outer position with respect to the belt layers 11a, 11b and including at least one reinforcing cord, preferably a plurality of cords circumferentially wound according to coils axially arranged side by side and usually called "zero-degree cords" in the art.

In a preferred embodiment, the belt structure 4 can comprise a belt layer 12 including zero-degree cords substantially extending for the entire transversal development of the belt structure 4; alternatively, the belt structure 4 can comprise a pair of belt layers 12, each including zero-degree cords, arranged near opposite shoulder zones of the tyre 2 and axially extending along a portion of limited width, as schematically shown in Figure 2.

In heavy-duty tyres, such as tyres for trucks and heavy transport vehicles, the belt structure 4 may also incorporate, at a radially outer position with respect to the belt layers 11a, 11b and 12, a further layer 13 made of elastomeric material preferably including a plurality of reinforcing cords, usually referred to as "breaker layer" and intended to prevent foreign bodies from entering the underlying belt layers.

In the preferred embodiment illustrated, the tread band 5 comprises at least two portions consisting of respective elastomeric materials having appropriate mechanical and chemical-physical characteristics.

These portions may be constituted by one or more radially superposed layers having suitable thickness, by suitably shaped sectors arranged according to a predetermined configuration along the axial development of the tread band or by a combination of both.

Thus, for example, the tread band 5 may include a radially inner layer or base layer, essentially consisting of a first elastomeric material having appropriate composition and mechanical and chemical-physical characteristics, for example adapted to reduce the rolling resistance of the tyre, and a radially outer layer essentially consisting of a second elastomeric material having composition and mechanical and chemical-physical characteristics differing from the first elastomeric material, for example adapted to optimise the grip performance on wet surfaces and the wear resistance of the tyre.

The individual components of the carcass structure 3 and of the belt structure 4, such as in particular the annular anchoring structures 7, the carcass plies 10, the belt layers 11 a, 11b and the elements of elastomeric material (strip-like elements) including at least one reinforcing cord and intended to form the belt layer 12 and optionally the breaker layer 13, are supplied to the plant 1 in the form of semifinished products made during preceding manufacturing steps, to be suitably assembled with each other according to the step described hereinafter.

With reference to Figure 1, a first preferred embodiment of a plant 1 for manufacturing tyres for vehicle wheels according to the invention, for example for manufacturing a tyre 2 of the type illustrated above, shall now be described.

In the following description, reference will be made to the various components of the tyre 2 in their state as semifinished products and, as regards the various elastomeric materials used, in their green state, that is, prior to the vulcanisation operations which link the various semifinished products together to give the final tyre 2.

The plant 1 comprises a building station 14 intended to build a substantially cylindrical carcass structure 3 comprising one or more carcass plies 10 operatively associated to the annular anchoring structures 7 axially spaced apart from each other.

The building station 14 comprises a primary drum 15, not described in detail as it can be made in any convenient manner, on which the carcass ply or plies 10 are preferably wound; said plies come from a feeding line 16 along which they are cut into sections of appropriate length related to the circumferential extension of the primary drum 15, before being applied thereon to form a so-called substantially cylindrical "carcass sleeve".

The building station 14 also comprises a line (not shown) for feeding the sidewalls 6, which line supplies a semifinished product in the form of a continuous strip of elastomeric material from which sections of predetermined length are cut out, said length being related to the circumferential extension of the primary drum 15 and of the tyre 2 to be manufactured.

Alternatively, the building station 14 can be provided with a further building drum (not shown) on which the assembly of the carcass structure 3 components and possibly also of the sidewalls 6 takes place, and with a transfer device (also not shown) for transferring the assembled carcass sleeve onto the primary drum 15.

The plant 1 further comprises a finishing station 17 intended to manufacture a substantially cylindrical sleeve comprising:
i) the tread band 5 including at least two portions, each consisting of a respective green elastomeric material, which tread band is applied at a radially outer position with respect to
ii) the belt structure 4 comprising the layers 11 a, 11b including reinforcing cords suitably inclined with respect to the circumferential development of the sleeve according to respectively crossed orientations between one belt layer and the other, optionally the layer 12 including reinforcing cords substantially parallel to the circumferential development direction of the substantially cylindrical sleeve, which layer 12, in this preferred variant, is applied at a radially outer position with respect to the layers 11a, 11b, and optionally the breaker layer 13 which, in this preferred variant, is applied at a radially outer position with respect to the layer 12.

The finishing station 17 comprises in turn a displacing apparatus 18 adapted to support a first auxiliary drum 19, a second auxiliary drum 20 and a third auxiliary drum 40 and to position said auxiliary drums 19, 20 and 40 at a plurality of working positions at which the operating steps required for manufacturing the above substantially cylindrical sleeve are carried out.

More particularly, the displacing apparatus 18 is adapted to position the auxiliary drums 19, 20 and 40 at a first working position, indicated with letter A in Figure 1, wherein the belt structure 4 is assembled, a second working position, indicated with letter B in Figure 1, wherein at least one first portion of the,tread band 5 is applied, at least one third working position indicated with letter C in Figure 1, wherein at least one second portion of the tread band 5 is applied and a picking position D of the substantially cylindrical sleeve manufactured in the finishing station 17.

In this preferred embodiment, the picking position D of the substantially cylindrical sleeve substantially coincides with the first working position A.

The working positions A, B and C are defined in different zones of the finishing station 17.

In the preferred embodiment illustrated in Figure 1, moreover, it is provided that in the picking position D the auxiliary drum 19, 20 or 40 positioned therein by the displacing apparatus 18 is arranged according to a relationship of coaxial alignment with the primary drum 15 of the building station 14.

The finishing station 17 comprises an apparatus for applying the belt structure 4 on the same auxiliary drum, generally indicated at 21, adapted to operatively interact with the auxiliary drum 19, 20 or 40 arranged at the first working position A by the displacing apparatus 18.

The applying apparatus 21 comprises in turn at least one delivery device 24 of the belt layers 1.1 a, 11b arranged at the first working position A for operatively interacting with the auxiliary drum 19, 20 or 40 arranged at said working position by the displacing apparatus 18.

By way of example, the delivery device 24 may comprise, in a way known *per se,* at least one feeding line 24a, along which the semifinished products in the form of a continuous strip are caused to move forward, said strip being then cut into sections of a length corresponding to the circumferential development of the auxiliary drums 19, 20 and 40 simultaneously with the formation of the respective belt layers 11 a, 11b on the same drums.

In a preferred embodiment, the applying apparatus 21 of the finishing station 17 further comprises at least one delivery device 22 of a strip-like element 23 of green elastomeric material including at least one reinforcing cord, preferably a plurality of textile or metallic reinforcing cords, strip-like element 23 that is applied at a radially outer position with respect to the belt layers 11a, 11b to form axially contiguous circumferential coils intended to form the belt layer 12.

To this end, the delivery device 22 is arranged at the first working position A for operatively interacting with the auxiliary drum 19, 20 or 40 arranged at said working position by the displacing apparatus 18.

In a preferred embodiment, the apparatus 21 comprises at least a further delivery device of a further belt layer preferably including a plurality of reinforcing cords, arranged at the first working position A for operatively interacting with the auxiliary drum 19, 20 or 40 arranged at said working position by the displacing apparatus 18 for forming the aforementioned breaker layer 13.

The finishing station 17 further comprises:
- at least two delivery members 25, 26, of respective continuous elongated elements 27, 28 of green elastomeric material, which delivery members are arranged at the second working position B for operatively interacting with the auxiliary drum 19, 20 or 40 arranged at said working position by the displacing apparatus 18, and
- at least one delivery member 41 of a further continuous elongated element 42 of green elastomeric material arranged at the third working position C for operatively interacting with the auxiliary drum 19, 20 or 40 arranged at said working position by the actuating apparatus 18.

Advantageously, the plant 1 thus structured allows to form the tread band 5 using at least three different elastomeric materials delivered by the delivery members 25 and 26 arranged at the second working position B and by the delivery member 41 arranged at the third working position C of the finishing station 17.

In a further preferred embodiment, not shown, the plant 1 can further comprise at least two delivery members of respective continuous elongated elements of green elastomeric material arranged at the third working position C for operatively interacting at opposite sides of the auxiliary drum 19, 20 or 40 arranged therein by the displacing apparatus 18.

This further embodiment allows to form the tread band 5 using up to four different elastomeric materials increasing the operating/technological flexibility of the plant and the application possibilities of the method implemented by the same.

In the preferred embodiment shown in Figure 1, the delivery members 25, 26 of the continuous elongated elements 27, 28 are arranged at the second working position B for operatively interacting at opposite sides of the auxiliary drum 19, 20 or 40 arranged at said working position by the displacing apparatus 18.

The delivery members 25, 26 are adapted to lay down the continuous elongated elements 27, 28 according to contiguous circumferential coils on a belt structure 4 previously assembled on the auxiliary drum 19, 20 or 40 arranged at the second working position B.

Similarly, also the delivery member 41 is adapted to lay down the continuous elongated element 42 according to contiguous circumferential coils at a radially outer position with respect to a belt structure 4 previously assembled on the auxiliary drum 19, 20 or 40 arranged at the third working position C.

More in particular, the delivery members 25, 26 and 41 can for example comprise an extruder or, alternatively, an applicator roller or other member adapted to deliver the continuous elongated elements 27, 28 and 42 at a radially outer position with respect to the belt structure 4 supported by the auxiliary drum 19, 20 or 40 at the second working position B or at the third working position C, simultaneously with winding of the elongated elements themselves at a radially outer position with respect to the belt structure 4 as will be better described hereinafter.

Preferably, each of the delivery members 25, 26 and 41 comprises at least one extruder indicated in Figure 1 with reference numerals 29, 30 and 43.

In order to wind the continuous elongated elements delivered by the extruders 29, 30 and 43 at a radially outer position with respect to the belt structure 4, the displacing apparatus 18 of the preferred embodiment shown in Figure 1 comprises at least one drum rotation unit, preferably a plurality of rotation units 31, 32 and 44 adapted to rotate the auxiliary drums 19, 20 and 40 about their geometrical axis.

In this way, it is advantageously possible to carry out, in an effective manner, a controlled deposition of the continuous elongated elements 27, 28 and 42 at a radially outer position with respect to the belt structure 4.

Preferably, and according to what is illustrated in Figure 1, the displacing apparatus 18 is of the substantially turret-like type and is adapted to support the auxiliary drums 19, 20 and 40 at positions angularly offset with each other, for example offset at an angle of about 120°.

Preferably, the displacing apparatus 18 is further provided with at least one driving unit 35 adapted to rotate the displacing apparatus 18 as a whole about a substantially vertical rotation axis Y-Y so as to position the auxiliary drums 19, 20 and 40 at the above first, second and third working positions A, B and C.

Preferably, the auxiliary drums 19, 20, 40 and the respective driving units 31, 32, 44 are slidably supported by the displacing apparatus 18 by a supporting carriage, not better shown in Figure 1, which is in turn slidably mounted on a rotatable supporting platform 39 of the displacing apparatus 18.

Preferably, each auxiliary drum 19, 20, 40 is in integral translating motion with the corresponding rotation unit 31, 32, 44 along the rotatable supporting platform 39.

In a preferred embodiment, the displacing apparatus 18 comprises at least one drum translating unit adapted to carry out controlled axial movements of the drums 19, 20, 40 at the working positions A, B, C or at the picking position D of the substantially cylindrical sleeve including the belt structure 4 and the tread band 5 manufactured in the finishing station 17.

Preferably, said drum translating unit causes controlled axial movements not only of the auxiliary drums 19, 20 and 40 but also of the relevant rotation units 31, 32 and 44.

In the preferred embodiment shown in Figure 1, the displacing apparatus 18 comprises a plurality of drum translating units 33, 34 and 45, for example of the type comprising a worm screw adapted to engage with a corresponding nut thread associated to said carriage supporting the auxiliary drums 19, 20 and 40.

Clearly, the drum translating units can comprise actuating mechanisms differing from those indicated above by way of example and selectable by a man skilled in the art as a function of specific application requirements.

Preferably, the drum translating units 33, 34 and 45 of the displacing apparatus 18 move the drums 19, 20 and 40 between the working positions A, B, C or the picking position D and a stand-by position defined between said positions and the rotation axis Y-Y of the displacing apparatus 18.

Preferably, said stand-by positions of the auxiliary drums 19, 20 and 40 are defined within the outer perimeter of the rotatable supporting platform 39, schematically indicated with a dashed line in Figure 1, which platform can be of circular type.

Clearly, the rotatable supporting platform 39 can have any suitable shape different from the circular one.

In this case, the stand-by positions of the auxiliary drums 19, 20 and 40 are preferably defined within an area - such as that schematically indicated with a dashed line in Figure 1 - sufficiently spaced apart from a control unit 37 by means of which an operator 38 can program and manage the various operating steps that can be carried out by the manufacturing plant 1.

Preferably, the drum translating units 33, 34 and 45 move the auxiliary drums 19, 20 and 40 along a radial direction passing through the rotation axis Y-Y of the displacing apparatus 18 as illustrated by the double arrows F3, F4 and F5 in Figure 1.

The drum translating units 33, 34 and 45 thus allow to achieve the following advantageous technical effects:
i) that of properly moving the auxiliary drums 19, 20 and 40 with respect to the delivery members 25, 26 and 41;
ii) that of carrying out a controlled deposition of the continuous elongated elements 27, 28 and 42 at a radially outer position with respect to the belt structure 4 according to coils partially arranged side by side and/or partially superposed with each other according to what is required to manufacture a tread band 5 having a high quality level;
iii) that of carrying out a predetermined offset of the belt layers delivered by the applying apparatus 21, for example to compensate any design asymmetries of the tyre 2; and
iv) that of decreasing the transversal dimensions and the inertia forces during the displacement of the auxiliary drums 19, 20 and 40 between the working positions A, B and C by moving the auxiliary drums 19, 20 and 40 close to the rotation axis Y-Y of the displacing apparatus 18.

Advantageously, moreover, the drum translating units 33, 34 and 45 allow to carry out a controlled deposition of the continuous elongated elements 27, 28 and 42 while maintaining stationary the delivery members 25, 26 and 41 with a simplification of the mechanical application system of the continuous elongated elements and, thereby, with a reduction of the costs for realising the plant 1.

The plant 1 further comprises at least one transfer device 36 of the substantially cylindrical sleeve manufactured in the finishing station 17, adapted to operatively interact with one of the auxiliary drums 19, 20 or 40 at the above-identified picking position D, in this case substantially coinciding with the first working position A, for transferring the substantially cylindrical sleeve manufactured in the finishing station 17 at a radially outer position with respect to the carcass structure 3 built in the building station 14.

The transfer device 36 preferably has a substantially annular conformation and is operated in a way known *per se* (not shown) so as to be arranged around the auxiliary drum 19, 20 or 40 positioned at the picking position D for picking up the substantially cylindrical sleeve including the belt structure 4 and the tread band 5 manufactured in the finishing station 17 and for transferring said sleeve coaxially to the carcass structure 3 built in the building station 14.

In a further alternative preferred embodiment, not shown for simplicity, the plant 1 may further comprise a delivery member of a respective continuous elongated element of green elastomeric material arranged at the picking position D (for example coinciding with the first working position A) of the substantially cylindrical sleeve manufactured in the finishing station 17 for operatively interacting with the auxiliary drum 19, 20 or 40 positioned therein by the displacing apparatus 18.

In this case, the plant 1 allows to apply the tread band 5 both in the second and in the third working positions B and C, and in the picking position D (for example coinciding with the first working position A) of the substantially cylindrical sleeve, wherever this is required to meet specific application requirements.

This further embodiment allows to form the tread band 5 using up to five different elastomeric materials, further increasing the operating/technological flexibility of the plant and the application possibilities of the method implemented by the same.

The plant 1 further comprises at least one apparatus (not shown being known *per se*) for shaping the carcass structure 3 according to a substantially toroidal shape so as to associate the substantially cylindrical sleeve comprising the belt structure 4 and the tread band 5 manufactured in the finishing station 17 to the carcass structure 3.

Preferably, this shaping apparatus is adapted to operatively interact with the primary drum 15 within the building station 14 so as to carry out, as it will be better understood hereinafter, a so-called unistage manufacturing process.

With reference to the plant 1 described above, a first preferred embodiment of a method according to the invention for manufacturing tyres for vehicle wheels, for example the tyre 2 described above, will now be described.

In particular, the method will be illustrated with reference to steady-state working conditions, as illustrated in Figure 1, wherein the auxiliary drum 19 is in the first working position A and does not support any semifinished products, the second auxiliary drum 20 is in the second working position B and supports a second belt structure 4 assembled on said drum in a previous step of the method and the third auxiliary drum 40 is in the third working position C and supports an assembly of semifinished products comprising a third belt structure 4 and at least one portion of the tread band 5 applied at a radially outer position with respect to the third belt structure 4 in a previous step of the method.

In a first step of the method, a substantially cylindrical carcass structure 3 comprising at least one carcass ply 10 operatively associated to the annular anchoring structures 7 axially spaced apart from each other, is built in the building station 14.

In this step, the carcass ply or plies 10 coming from the feeding line 16 along which they are cut into sections of appropriate length, related to the circumferential development of the primary drum 15, before being applied thereto, are wound on the primary drum 15 to form a so-called substantially cylindrical "carcass sleeve".

Afterwards, the annular anchoring structures 7 are fitted onto the end flaps 10a of ply/plies 10 to subsequently carry out the turning-up of the end flaps themselves to cause an engagement of the anchoring structures 7 into the loops thus formed by the turned-up ply/plies 10. The tyre sidewalls 6 may also be applied to the carcass sleeve, which sidewalls come from at least one respective sidewall-feeding line (not shown) supplying a semifinished product in the form of a continuous strip of elastomeric material, from which sections of predetermined length are cut out, said length being related to the circumferential development of the primary drum 15 and of the tyre 2 to be manufactured.

The method of the invention provides for the manufacture, in the finishing station 17, of a substantially cylindrical sleeve comprising the tread band 5 applied at a radially outer position with respect to the belt structure 4 including at least one belt layer, in this preferred embodiment the belt layers 11a, 11b, 12 and optionally 13.

The manufacture of this substantially cylindrical sleeve occurs at least in part simultaneously with the assembly of the components of the carcass structure 3 in the form of cylindrical sleeve (or carcass sleeve) on the primary drum 15.

More particularly, the manufacture of the substantially cylindrical sleeve including the belt structure 4 and the tread band 5 carried out in the finishing station 17 comprises the operating steps illustrated hereinafter.

According to the invention, these steps are carried out at least in part simultaneously.

In a first step, a first belt structure 4 is assembled at the first working position A on the first auxiliary drum 19 of the finishing station 17.

In a preferred embodiment, the assembly step of the first belt structure 4 provides in the first place for carrying out the steps of applying at a radially outer position with respect to the first auxiliary drum 19 the first belt layer 11a comprising respective reinforcing cords inclined with respect to the circumferential development direction of the sleeve and of applying at a radially outer position with respect to the first belt layer 11a the second belt layer 11b comprising reinforcing cords inclined along a crossed direction with respect to said reinforcing cords belonging to the first belt layer 11a.

Advantageously, these steps are carried out by means of the delivery device 24 of the belt layers which operatively interacts with the auxiliary drum 19 positioned at the first working position A by the displacing apparatus 18 and by the rotation unit 31 which rotates the auxiliary drum 19 about its geometrical axis during the application of the various semifinished products.

More specifically, the feeding line 24a of the delivery device 24 delivers semifinished products in the form of a continuous strip, which are then cut into sections of a length corresponding to the circumferential development of the auxiliary drum 19 simultaneously with the formation of the respective belt layers 11a, 11b on the same drum, which is simultaneously rotated by the rotation unit 31.

In a preferred embodiment, the assembly step of the first belt structure 4 therefore provides for carrying out the step of applying at a radially outer position with respect to the first auxiliary drum 19 at least one strip-like element 23 of green elastomeric material including the reinforcing cord(s) to form axially contiguous circumferential coils, so as to obtain the belt layer 12 including reinforcing cords substantially parallel to the circumferential development direction of the substantially cylindrical sleeve being manufactured.

Preferably, said strip-like element 23 is applied at a radially outer position with respect to the second belt layer 11b substantially along the entire transversal development of the first belt structure 4 or, alternatively, only at opposed axial ends of the underlying belt layers 11a, 11b.

Advantageously, this step is carried out by the delivery device 22 of the application apparatus 21, which is also arranged at the first working position A for operatively interacting with the auxiliary drum 19 arranged therein by the displacing apparatus 18.

In a preferred embodiment, the assembly step of the first belt structure 4 finally provides for carrying out the step of applying the breaker layer 13 of green elastomeric material preferably including a plurality of reinforcing cords preferably inclined with respect to the circumferential development direction of the sleeve, at a radially outer position with respect to the underlying belt layers, in this case at a radially outer position with respect to the belt layer 12.

Advantageously, this step is carried out by a further delivery device of a belt layer preferably including a plurality of reinforcing cords (delivery device not shown for simplicity in Figure 1), arranged at the first working position A for operatively interacting with the auxiliary drum 19 arranged therein by the displacing apparatus 18.

The manufacture of the substantially cylindrical sleeve including the belt structure 4 and the tread band 5 provides for forming a tread band 5 at a radially outer position with respect to a second and to a third belt structure 4 assembled on the second auxiliary drum 20 and, respectively, on the third auxiliary drum 40 in previous operating steps of the method.

According to the invention, these forming steps of the tread band 5 on the second auxiliary drum 20 arranged at the second working position B and on the third auxiliary drum 40 arranged at the third working position C are carried out at least in part simultaneously with the step of assembling the first belt structure 4 on the first auxiliary drum 19 arranged at the first working position A.

In the preferred embodiment considered herein, the tread band 5 is applied at the working positions B and C and optionally at the picking position, at a radially outer position with respect to the second belt structure 4 supported by the second auxiliary drum 20 at the second working position B and, respectively, at a radially outer position with respect to the third belt structure 4 supported by the third auxiliary drum 40 at the third working position C.

More in particular, in this embodiment the manufacturing method provides for the application of at least one first portion of the tread band 5 at the second working position B at a radially outer position with respect to the second belt structure 4 previously assembled on the second auxiliary drum 20 of the finishing station 17.

In particular, this application step is carried out by laying down at least one continuous elongated element, preferably at least two continuous elongated elements 27 and 28 of green elastomeric material at a radially outer position with respect to the second belt structure 4 according to respective predetermined paths.

Preferably, the continuous elongated elements 27, 28 are laid down at opposite sides of the second auxiliary drum 20 arranged at the second working position B by the displacing apparatus 18.

Preferably, the continuous elongated elements 27, 28 consist of respective elastomeric materials having different mechanical and/or chemical-physical characteristics so as to impart the desired performance to the tread band 5.

Advantageously, the application step of the tread band 5 is carried out by the delivery members 25, 26 arranged at the second working position B for operatively interacting with the auxiliary drum 20 arranged therein by the displacing apparatus 18.

In an alternative embodiment, at least one of the delivery members 25, 26 can deliver at least one of said continuous elongated elements 27, 28 in the form of a semifinished product made of elastomeric material in the form of a continuous strip, so as to form a portion of the tread band 5, such as a radially inner layer thereof. Preferably, this strip has a width substantially equal to the transversal development of the tread band 5 and is preferably cut into sections of a length corresponding to the circumferential development of the auxiliary drum 20 simultaneously with the formation of at least one portion of the tread band 5 on the same drum, which is simultaneously rotated by the rotation unit 32.

Preferably, however, the delivery of the continuous elongated elements 27, 28 is carried out by extrusion through the extruders 29, 30 of the delivery members 25, 26.

Preferably, the continuous elongated elements 27, 28 delivered by each extruder 29, 30 can advantageously possess a flattened section, so as to modulate the thickness of the elastomeric layer formed by them at a radially outer position with respect to the belt structure 4 by changing the overlapping amount of the contiguous coils and/or the orientation of the profile along a transversal direction of each elongated element 27, 28 coming from the corresponding extruder 29, 30 with respect to the underlying surface.

Preferably, the continuous elongated elements 27, 28 are laid down according to contiguous circumferential coils axially arranged side by side and/or radially superposed at a radially outer position with respect to the second belt structure 4 supported by the auxiliary drum 20 at the second working position B.

In this preferred embodiment, the application step of the tread band 5 is carried out by delivering the continuous elongated elements 27, 28 by means of the delivery members 25, 26 arranged at the second working position B near the second auxiliary drum 20, simultaneously with winding of the continuous elongated elements 27, 28 on said drum.

In particular, such winding is accomplished by carrying out, simultaneously with the application of the continuous elongated elements 27, 28, the steps of:
- imparting to the second auxiliary drum 20 carrying the second belt structure 4 a rotary motion about a geometric axis thereof, so as to circumferentially distribute the continuous elongated elements 27, 28 at a radially outer position with respect to the second belt structure 4;
- carrying out controlled relative displacements between the second auxiliary drum 20 and the delivery members 25, 26 to form with the continuous elongated elements 27, 28 a plurality of coils arranged in mutual side by side relationship to define at least one portion of the tread band 5.

In this preferred embodiment, the controlled relative displacements between the second auxiliary drum 20 and the delivery members 25, 26 are preferably carried out by moving the second auxiliary drum 20 with respect to said delivery members.

Preferably, the continuous elongated elements 27, 28 are delivered by the extruders 29, 30 simultaneously with a controlled rotation movement of the auxiliary drum 20 about its geometrical axis and a controlled translation movement of said drum with respect to the delivery members 25, 26, for example along a direction substantially parallel to said axis.

Advantageously, this rotation-translation movement of the auxiliary drum 20 is carried out by means of the displacing apparatus 18, in particular thanks to the action of the rotation unit 32 and of the translating unit 34 of such apparatus.

In this preferred embodiment of the method of the invention and thanks to the delivery of two continuous elongated elements 27, 28, it is advantageously possible to form, in a very flexible manner from the production point of view, a tread band 5 having structural features capable to achieve the desired performance of the tyre 2.

In this embodiment, the manufacturing method further provides for the step of applying at least one second portion of the tread band 5 at the third working position C at a radially outer position with respect to the third belt structure 4 assembled on the third auxiliary drum 40 of the finishing station 17; in particular, this application step is carried out by laying down according to a predetermined path at least one continuous elongated element of green elastomeric material at a radially outer position with respect to the third belt structure 4.

In this preferred embodiment of the method of the invention, this last operating step is carried out by delivering the continuous elongated element 42 from the respective delivery member 41 arranged at the third working position C near the third auxiliary drum 40, simultaneously with winding of the continuous elongated element 42 on said drum.

The deposition of the continuous elongated element 42 is advantageously carried out at the third working position C according to the preferred ways described above with reference to the continuous elongated elements 27 and 28, that is, by imparting a rotation and a translation motion to the auxiliary drum 40, so as to carry out controlled relative movements between the third auxiliary drum 40 and the delivery member 41.

Advantageously, this rotating and translating motion of the auxiliary drum 40 is carried out by means of the displacing apparatus 18, in particular thanks to the action of the rotation unit 44 and of the translating unit 45 of such apparatus.

In this preferred embodiment of the method of the invention and thanks to the delivery of at least three continuous elongated elements 27, 28 and 42, it is advantageously possible to further increase the flexibility of production of the tread band 5 so as to achieve the desired performance of the tyre 2.

Thus, for example, it is advantageously possible to form - in a preferred alternative embodiment - a tread band 5 including a pair of radially superposed layers, respectively inner and outer, according to a configuration known in the art with the term of *"cap-and-base".*

According to this preferred embodiment, the application step of the tread band 5 is carried out at the second working position B by laying down one of said continuous elongated elements, for example the continuous elongated element 27, at a radially outer position with respect to the second belt structure 4 supported by the second auxiliary drum 20 along substantially its entire transversal development so as to form a radially inner layer of the tread band 5.

Afterwards, the application step of the tread band 5 provides for laying down the second continuous elongated element 28 at a radially outer position with respect to at least one portion of the radially inner layer of the tread band 5 thus formed, so as to form a corresponding first portion of a radially outer layer of the tread band 5.

In this preferred embodiment, therefore, the laying down of the continuous elongated elements 27, 28 according to contiguous circumferential coils axially arranged side by side and/or radially superposed is carried out in two consecutive steps.

Within the framework of this embodiment, the method thus provides for applying at least one second portion of a radially outer layer of the tread band 5 at the third working position, by laying down at said third working position C the third continuous elongated element 42 at a radially outer position with respect to a remaining portion of the radially inner layer of the tread band 5, more precisely at an axially aligned position with said first portion of the radially outer layer of the tread band 5 formed by the aforementioned second continuous elongated element 28, so as to form said further portion of the radially outer layer of the tread band 5.

In this way, it is possible to form a tread band 5 of the *"cap-and-base"* type provided with a radially outer layer including two or more axially aligned sectors having specific mechanical characteristics according to a configuration which allows to achieve a plurality of advantageous technical effects, such as for example an improved resistance to the transversal stresses acting on the tread band 5 during use of the tyre 2, or the possibility of keeping the grip performance of the tyre 2 substantially constant as the tread band 2 wears out.

In a further preferred alternative embodiment it is also advantageously possible to form a tread band 5 provided with a radially inner layer including two or more axially aligned sectors having different mechanical characteristics.

According to this preferred embodiment, the application step of the tread band 5 is carried out at the second working position B by laying down one of said continuous elongated elements, for example the continuous elongated element 27, at a radially outer position with respect to at least one portion of the second belt structure 4 supported by the second auxiliary drum 20, so as to form at least one first portion of a radially inner layer of the tread band 5.

Afterwards, the application step of the tread band 5 provides for laying down the second continuous elongated element 28 - again at the second working position B - at a radially outer position with respect to said second belt structure 4, and more precisely at an axially aligned position with respect to said first portion, so as to form at least one second portion of the radially inner layer of the tread band.

In this way, it is possible to form a tread band 5 provided with a radially inner layer having at least two axially aligned portions or sectors having different mechanical and chemical-physical characteristics.

In this preferred embodiment, the laying down of the continuous elongated elements 27, 28 can be carried out at the second working position B either in successive steps or at least in part simultaneously.

Afterwards, the application step of the tread band 5 provides for laying down at the third working position C the third continuous elongated element 42 at a radially outer position with respect to the radially inner layer having a plurality of axially aligned sectors of the tread band 5 along substantially the entire transversal development of such layer, so as to form a radially outer layer of the tread band 5.

In a further alternative embodiment, it is possible to form a radially outer layer of the tread band 5 including two or more axially aligned portions or sectors, similarly to what has been described above, by providing at least one further delivery member of a respective continuous elongated element arranged at the third working position C of the finishing station 17 and adapted to operatively interact with the third auxiliary drum 40.

In this way, it is possible to lay down the continuous elongated element 42 at a radially outer position with respect to at least one portion of the radially inner layer of the tread band 5 supported by the third auxiliary drum 40, so as to form at least one first portion of the radially outer layer of the tread band 5.

Afterwards, the application step of the tread band 5 provides for laying down this further continuous elongated element, always in the third working position C, at a radially outer position with respect to at least one remaining portion of the radially inner layer of the tread band 5, more precisely at an axially aligned position with respect to said first portion of the radially outer layer of the tread band 5 formed by the third continuous elongated element 42, so as to form at least one second portion of the radially outer layer of the tread band 5.

Once said steps of assembling the first belt structure 4 on the first auxiliary drum 19 and of applying the tread band 5 at a radially outer position with respect to the second and third belt structures 4 previously assembled on the auxiliary drums 20 and 40 have been completed, the method of the invention provides for carrying out the steps of:
- positioning the first auxiliary drum 19 supporting the first belt structure 4 at the second working position B,
- positioning the second auxiliary drum 20 supporting the second belt structure 4 and at least one portion of the tread band 5 at the third working position C, and
- positioning the third auxiliary drum 40 supporting the substantially cylindrical sleeve, including the tread band 5 applied at a radially outer position with respect to the third belt structure 4, at the picking position D of the finishing station 17.

In the preferred embodiment described with reference to the plant 1 of Figure 1, the picking position D of the substantially cylindrical sleeve thus manufactured substantially coincides with the first working position A.

According to the method of the invention, the aforementioned steps of positioning the auxiliary drums 19, 20 and 40 respectively: at the second working position B, at the third working position C and at the picking position D, are carried out at least in part simultaneously with each other.

In particular, such steps are preferably carried out by means of the displacing apparatus 18 by rotating the same about the substantially vertical rotation axis Y-Y preferably according to a single direction, for example the counter clockwise one indicated by the arrow F2 in Figure 1, thanks to the action of the driving unit 35.

In a preferred embodiment and thanks to the fact that the auxiliary drums 19, 20 and 40 are slidably supported by the displacing apparatus 18, the method of the invention comprises the further step of translating the auxiliary drums 19, 20 and 40 towards the rotation axis Y-Y of the displacing apparatus 18 before carrying out the rotation step of such apparatus.

Said step is preferably carried out by the drum translating units 33, 34 and 45 by translating both the auxiliary drums 19, 20 and 40 and the relevant rotation units 31, 32 and 44, which are preferably translationally integral with the drums.

In this way, it is advantageously possible to decrease both the transversal dimensions and the inertia forces during the movements of the auxiliary drums 19, 20 and 40 between the working positions A, B and C with an increase of the safety features of the plant 1 and with a reduction of the driving force required to the driving unit 35 for rotating the displacing apparatus 18.

Preferably, the auxiliary drums 19, 20 and 40 and the corresponding rotation units 31, 32 and 44 are translated towards the rotation axis Y-Y of the displacing apparatus 18 and are arranged at the aforementioned stand-by positions defined inside the outer perimeter of the rotatable supporting platform 39 of such apparatus.

Advantageously, the auxiliary drums 19, 20 and 40 of the displacing apparatus 18 are arranged in this case at a safe distance from both the control unit 37 and from the operator 38 during the rotation of the displacing apparatus 18, as schematically illustrated in dotted line in Figure 1.

Once said substantially simultaneous steps of positioning the first auxiliary drum 19 at the second working position B, the second auxiliary drum 20 at the third working position C and the third auxiliary drum at the picking position D (the first working position A) have been carried out, the finishing station 17 is in an operating condition in which:
i) a substantially cylindrical sleeve including the third belt structure 4 and the tread band 5 ready to be removed from the third auxiliary drum 40 is arranged at the picking position D (the same working position A), and is supported by the third auxiliary drum 40;
ii) the first belt structure 4 previously assembled at the first working position A and supported by the first auxiliary drum 19, is ready to receive at least one portion of a new tread band 5 at the second working position B; and
iii) a semifinished product including the second belt structure 4 previously assembled at the first working position A and a portion of the tread band 5 previously applied at the second working position B, is supported by the second auxiliary drum 20 and is ready to receive the remaining portion (or a further portion) of the tread band 5 at the third working position C.

At this point, the method of the invention provides for the step of transferring the substantially cylindrical sleeve supported by the third auxiliary drum 40 from the picking position D of the finishing station 17 at a radially outer position with respect to the carcass structure 3 built in the meantime in the building station 14.

Advantageously, this transfer step is carried out by the substantially ring-shaped transfer device 36 according to methods known *per se* in the art.

After said transfer step, the finishing station 17 is in an operating condition wherein the third auxiliary drum 40 is already arranged at the first working position A and is ready to support a new belt structure 4 thanks to the operating interaction with the application apparatus 21 arranged near such a working position A.

At this point, the method of the invention provides for carrying out at least in part simultaneously the steps of:
- assembling a new belt structure 4 at the first working position A on the third auxiliary drum 40,
- applying at least one first portion of the tread band 5 at the second working position B at a radially outer position with respect to the first belt structure 4 previously assembled on the first auxiliary drum 19; and
- applying at least one second portion of the tread band 5 at the third working position C at a radially outer position with respect to the second belt structure 4 assembled on the auxiliary drum 20.

Once said steps have been carried out, the method of the invention provides for carrying out at least in part simultaneously the steps of positioning the third auxiliary drum 40 supporting the new belt structure 4 at the second working position B, of positioning the first auxiliary drum 19 supporting the first belt structure and at least one first portion of the tread band 5 at the third working position C and of positioning the second auxiliary drum 20 supporting the substantially cylindrical sleeve, including the tread band 5 applied at a radially outer position with respect to the second belt structure 4, at the picking position D of the finishing station 17.

At this point, the method of the invention provides for the step of transferring the new substantially cylindrical sleeve just manufactured and supported by the second auxiliary drum 20 from the picking position D of the finishing station 17 at a radially outer position with respect to a new carcass structure 3 built in the meantime in the building station 14.

After this transfer step, the finishing station 17 is in an operating condition wherein the second auxiliary drum 20 is already arranged at the first working position A and ready to support a new belt structure 4 thanks to the operating interaction with the application apparatus 21 arranged at such a working position A.

At this point, the method of the invention provides for carrying out at least in part simultaneously the steps of:
- assembling a new belt structure 4 at the first working position A on the second auxiliary drum 20,
- applying at least one first portion of the tread band 5 at the second working position B at a radially outer position with respect to the belt structure 4 previously assembled on the third auxiliary drum 40; and
- applying at least one second portion of the tread band 5 at the third working position C at a radially outer position with respect to the first belt structure 4 assembled on the first auxiliary drum 19.

Once the aforementioned steps have been carried out, the method of the invention provides for carrying out at least in part simultaneously the steps of positioning the second auxiliary drum 20 supporting the new belt structure 4 at the second working position B, of positioning the third auxiliary drum 40 supporting the belt structure 4 previously assembled and at least one first portion of the tread band 5 at the third working position C and of positioning the first auxiliary drum 19 supporting the substantially cylindrical sleeve, including the tread band 5 applied at a radially outer position with respect to the first belt structure 4, at the picking position D of the finishing station 17.

At this point, the method of the invention provides for the step of transferring the substantially cylindrical sleeve supported by the first auxiliary drum 19 from the picking position D of the finishing station 17 at a radially outer position with respect to a new carcass structure 3 built in the meantime in the building station 14.

Once the operations described above have been completed, the finishing station 17 returns to the initial operating condition indicated above.

At the end of each cyclical repetition of the aforementioned steps of assembling the belt structure 4/applying portions of the tread band 5 and of rotating the displacing apparatus 18, a new substantially cylindrical sleeve including the belt structure 4 and the tread band 5, supported at the picking position D (in this case the working position A) by one of the auxiliary drums 19, 20 and 40 of the finishing station 17, is manufactured.

Such sleeve is then transferred from the picking position D of the finishing station 17 at a radially outer position with respect to a new carcass structure 3 built in the building station 14 according to the method described above.

In this preferred embodiment, the steps of manufacturing the substantially cylindrical sleeve including the tread band 5 and the belt structure 4 and of transferring such sleeve from the picking position of the finishing station 17 are preferably carried out in a time interval substantially equal to or smaller than, the time for carrying out the step of building the carcass structure 3 in the building station 14.

In this way, it is advantageously possible to manufacture and transfer the substantially cylindrical sleeve including the tread band 5 and the belt structure 4 in the cycle time used to built the carcass structure 3 in the building station 14 optimising the process times and increasing the productivity of the manufacturing plant 1.

In a particularly preferred embodiment of the invention, the assembly of the substantially cylindrical sleeve including the tread band 5 and the belt structure 4 with the carcass structure 3 not toroidally shaped yet (otherwise called "carcass sleeve") is carried out on the same primary drum 15 of the building station 14 used for building the carcass sleeve, thus integrating a unistage manufacturing process.

Advantageously, a high quality level of the tyre 2 being manufactured is ensured in this way, thanks to the limited number of operations during the assembly of green semifinished products still in a substantially plastic state. Such semifinished products are thus subjected to a correspondingly limited number of potentially deforming stresses, thus advantageously limiting the risk of undesired structural alterations of the green tyre being manufactured.

Within the framework of said unistage manufacturing process, the transfer device 36 having a substantially annular conformation is operated so as to be placed around the auxiliary drum 19, 20 or 40 arranged at the picking position D for picking up the substantially cylindrical sleeve including the belt structure 4 and the tread band 5 from the same drum. In a way known *per se*, the auxiliary drum 19, 20 or 40 disengages said sleeve which is then axially translated by the transfer device 36 to be placed in a coaxially centred position on the primary drum 15 supporting the carcass sleeve.

Alternatively, the assembly of the carcass sleeve with the tread band 5/belt structure 4 sleeve may be carried out on a so-called shaping drum onto which the carcass sleeve and the tread band 5/belt structure 4 sleeve are transferred, to manufacture the tyre according to a so-called "two-stage manufacturing process".

In a preferred embodiment, the method further comprises - after said transfer step - the step of shaping the substantially cylindrical carcass structure 3 according to a substantially toroidal shape so as to associate the same to the substantially cylindrical sleeve including the tread band 5 and the belt structure 4 transferred at a radially outer position with respect to the carcass structure.

Preferably, this shaping step is carried out by axially moving the annular anchoring structures 7 close to each other and simultaneously admitting fluid under pressure into the assembly consisting of the carcass structure 3 and of the substantially cylindrical sleeve including the tread band 5 and the belt structure 4, so as to place the carcass ply(ies) 10 in contact against the inner surface of the belt structure 4 held by the transfer device 36.

In this way, a green tyre is manufactured which can be removed from the primary drum 15 or from the shaping drum to be subjected to a usual vulcanisation step carried out in a vulcanisation station (not shown) of a plant for making a tyre (not shown) comprising the manufacturing plant 1 described above.

Clearly, the method and the apparatus described above allow to manufacture a tyre 2 having a different structure, for example by applying further layers or elements at the first, at the second and/or at the third working position A, B, C and/or at the picking position D.

All this can be obtained by positioning at such positions suitable delivery equipment adapted to operatively interact with the auxiliary drums 19, 20 or 40 arranged therein by the displacing apparatus 18.

In a further alternative embodiment, the method of the invention may provide for the step of applying at the picking position D (for example coinciding with the first working position A) at a radially outer position with respect to the belt structure 4 supported by the auxiliary drum 19, 20 or 40 arranged therein, an additional first or last continuous elongated element of green elastomeric material according to a respective predetermined path, so as to begin or complete the tread band 5 at the picking position D.

In this case, it is advantageously possible to form the tread band 5 using four or five different elastomeric materials delivered by the delivery members 25, 26 arranged at the second working position B and by one or two delivery members arranged at the third working position C and by a delivery member arranged at the picking position D of the finishing station 17.

Preferably, this application step is carried out according to the methods described above, that is, by delivering such continuous elongated element by an extruder of a further delivery member (not shown) arranged at the picking position D (for example coinciding with the first working position A) near the auxiliary drum 19, 20 or 40 arranged therein and by winding the continuous elongated element on said drum as illustrated above.

Advantageously, this further delivery member may be provided with a respective actuating group (not shown) adapted to move such member to and from the auxiliary drum arranged at the picking position D (for example coinciding with the first working position A), so as to not interfere with the subsequent picking operations of the substantially cylindrical sleeve including the belt structure 4 and the tread band 5.

From repeated tests carried out by the Applicant, it has been found that the manufacturing method and apparatus according to the invention, in their possible alternative embodiments, fully achieve the object of manufacturing a high quality tyre reconciling the different productivity rates of the building station of the carcass structure and of the finishing station intended to manufacture the substantially cylindrical sleeve including a belt structure 4 provided with at least one belt layer and with a tread band 5 including at least two different portions each of which is formed by winding coils of a respective continuous elongated element.

In addition, it should be noted that the method according to the invention achieves the aforementioned object thanks to a sequence of operating steps that can be carried out by a structurally simple and easy to manage manufacturing plant.

Advantageously, the manufacturing plant of the invention can be arranged downstream of an existing station for building the carcass structures, thus increasing the productivity of the tyre manufacturing plant which incorporates the same.

Advantageously, moreover, the assembly of the carcass sleeve with the outer belt structure/tread band sleeve can be carried out on the same drum used for building the carcass sleeve, integrating a unistage manufacturing process which makes it possible to maximise the productivity of the manufacturing plant and the quality characteristics of the tyres manufactured by the same.

Finally, it should be observed that the number of auxiliary drums and of the working positions defined in the finishing station 17 can be higher than three depending upon specific application requirements.

In this case, the auxiliary drums will be preferably supported by the displacing apparatus 18 at positions angularly offset with each other by an angle substantially equal to about 360°/n where n is the total number of auxiliary drums.

In this case, the plant 1 comprises a suitable number of application apparatuses 21 of the belt layers and/or of delivery members of respective continuous elongated elements arranged at the working positions defined in the finishing station 17 for operatively interacting with the auxiliary drums arranged therein by the displacing apparatus 18.

## Claims

1. A method for manufacturing tyres for vehicle wheels, comprising the steps of:
a) building in a building station (14) a substantially cylindrical carcass structure (3) comprising at least one carcass ply (10) operatively associated to annular anchoring structures (7) axially spaced apart from each other;
b) manufacturing in a finishing station (17) a substantially cylindrical sleeve comprising a tread band (5) applied at a radially outer position with respect to a belt structure (4) comprising at least one belt layer (11a, 11b, 12), said step b) comprising the steps of:
b1) assembling a first belt structure (4) at a first working position (A) on a first auxiliary drum (19) of the finishing station (17);
b2) applying at least one first portion of the tread band (5) at a second working position (B) at a radially outer position with respect to a second belt structure (4) previously assembled on a second auxiliary drum (20) of the finishing station (17); said application step being carried out by laying down according to a predetermined path at least one continuous elongated element (27, 28) of green elastomeric material at a radially outer position with respect to said second belt structure (4);
b3) applying at least one second portion of the tread band (5) at at least one third working position (C) at a radially outer position with respect to a third belt structure (4) assembled on at least one third auxiliary drum (40) of the finishing station (17); said application step being carried out by laying down according to a predetermined path at least one continuous elongated element (42) of green elastomeric material at a radially outer position with respect to said third belt structure (4);
b4) positioning the first auxiliary drum (19) supporting the first belt structure (4) at said second working position (B);
b5) positioning the second auxiliary drum (20) supporting the second belt structure (4) and said at least one portion of the tread band (5) at said third working position (C);
b6) positioning said at least one third auxiliary drum (40) supporting the substantially cylindrical sleeve thus obtained at a picking position (D) of the finishing station (17);
c) transferring said substantially cylindrical sleeve from said picking position (D) of the finishing station (17) at a radially outer position with respect to a carcass structure (3) built in the meantime in the building station (14);
wherein said steps from b1) to b6) are repeated cyclically;
wherein steps from b1) to b3) are carried out at least in part simultaneously with one another; and
wherein steps from b4) to b6) are carried out at least in part simultaneously with one another.

2. A method according to claim 1, wherein said steps b) and c) are carried out in a time interval substantially equal to or smaller than, the time for carrying out said step a) of building the carcass structure (3).

3. A method according to claim 1, wherein said step b1) further comprises the steps of:
i) applying at a radially outer position with respect to the first auxiliary drum (19) a first belt layer (11a) including first reinforcing cords inclined with respect to the circumferential development direction of the sleeve; and
ii) applying at a radially outer position with respect to the first belt layer a second belt layer (11b) comprising second reinforcing cords inclined along a crossed direction with respect to said first reinforcing cords.

4. A method according to claim 3, wherein said step b1) further comprises the step of
iii) applying at a radially outer position with respect to the first auxiliary drum (19) a strip-like element (23) of green elastomeric material including at least one reinforcing cord to form axially contiguous circumferential coils, so as to obtain a belt layer (12) including reinforcing cords substantially parallel to the circumferential development direction of the sleeve.

5. A method according to claim 4, wherein said strip-like element (23) of green elastomeric material is applied at a radially outer position with respect to the second belt layer (11b).

6. A method according to any one of claims 1, 3, 4 or 5, wherein said step b1) further comprises the step of
iv) applying a further layer (13) of green elastomeric material at a radially outer position with respect to said at least one belt layer (11a, 11b, 12), said layer (13) comprising a plurality of reinforcing cords.

7. A method according to claim 1, wherein said step b2) is carried out at said second working position (B) by laying down according to respective predetermined paths at a radially outer position with respect to said second belt structure (4) a first (27) and a second (28) continuous elongated element of green elastomeric material.

8. A method according to claim 7, wherein said step b2) is carried out at said second working position (B) by laying down said first continuous elongated element (27) of green elastomeric material at a radially outer position with respect to said second belt structure (4) along substantially the entire transversal development thereof so as to form a radially inner layer of the tread band (5).

9. A method according to claim 8, wherein said step b2) is carried out at said second working position (B) by laying down a second continuous elongated element (28) at a radially outer position with respect to at least one portion of said radially inner layer of the tread band (5) so as to form a corresponding portion of a radially outer layer of the tread band (5).

10. A method according to claim 9, wherein said step b3) is carried out by laying down at said third working position (C) at least one third continuous elongated element (42) of green elastomeric material at an axially aligned position with respect to said at least one portion of a radially outer layer of the tread band (5) formed by said second continuous elongated element (28), so as to form a further portion of the radially outer layer of the tread band (5).

11. A method according to claim 7, wherein said step b2) is carried out at said second working position (B) by laying down said first continuous elongated element (27) at a radially outer position with respect to at least one portion of said second belt structure (4) so as to form a corresponding portion of a radially inner layer of the tread band (5).

12. A method according to claim 11, wherein said step b2) is carried out at said second working position (B) by laying down a second continuous elongated element (28) at an axially aligned position with respect to said at least one portion of a radially inner layer of the tread band (5) formed by said first continuous elongated element (27), so as to form a further portion of the radially inner layer of the tread band (5).

13. A method according to claim 12, wherein said step b3) is carried out by laying down at said third working position (C) at least one third continuous elongated element (42) of green elastomeric material at a radially outer position with respect to the radially inner layer of the tread band (5) along substantially the entire transversal development thereof so as to form a radially outer layer of the tread band (5).

14. A method according to claim 1, wherein said step b) further comprises the step of
b7) applying according to a respective predetermined path a further continuous elongated element of green elastomeric material at said picking position (D) at a radially outer position with respect to said third belt structure (4).

15. A method according to any one of claims from 7 to 14, wherein said first (27) and said second (28) continuous elongated elements are laid down at opposite sides of the second auxiliary drum (20).

16. A method according to claim 1, wherein said steps b2) and b3) are carried out by delivering said continuous elongated elements (27, 28, 42) from respective delivery members (25, 26, 41) arranged at said second (B) and at said at least one third (C) working position near said second (20) and said at least one third (40) auxiliary drum, simultaneously with winding of the continuous elongated elements (27, 28, 41) on said drums (20, 40).

17. A method according to claim 14, wherein said step b7) is carried out by delivering said further continuous elongated element from a respective delivery member arranged at said picking position (D) near said third auxiliary drum (40), simultaneously with winding of the continuous elongated element on said drum (40).

18. A method according to any one of claims 16 or 17, wherein the delivery of said continuous elongated elements (27, 28, 42) is carried out by extrusion through said delivery members (25, 26, 41).

19. A method according to claim 16, wherein said step b2) is effected by carrying out, simultaneously with the application of said at least one continuous elongated element (27, 28, 42), the steps of:
d) imparting to at least one of said first (19) or second (20) auxiliary drum carrying the first or the second belt structure (4) a rotary motion about a geometric axis thereof, so as to circumferentially distribute said at least one continuous elongated element (27, 28) on said first or second belt structure (4);
e) carrying out controlled relative displacements between said at least one auxiliary drum (19, 20) and the delivery member (25, 26) to form with said at least one continuous elongated element (27, 28) a plurality of coils arranged in mutual side by side relationship to define said at least one portion of the tread band (5).

20. A method according to any one of claims 16 or 17, wherein said steps b3) and b7) are effected by carrying out, simultaneously with the application of said continuous elongated elements (27, 28, 42), the steps of:
d') imparting to said at least one third auxiliary drum (40) carrying the third belt structure (4) a rotary motion about a geometric axis thereof, so as to circumferentially distribute said at least one continuous elongated element (42) at a radially outer position with respect to the third belt structure (4);
e') carrying out controlled relative displacements between said at least one third auxiliary drum (40) and the delivery member (41) to form with said at least one continuous elongated element (42) a plurality of coils arranged in mutual side by side relationship to define at least one radially outer portion of the tread band (5).

21. A method according to any one of claims 19 or 20, wherein said displacements are carried out by moving the first (19) or the second (20) auxiliary drum or said at least one third auxiliary drum (40) with respect to said delivery members (25, 26, 41).

22. A method according to any one of claims 19 or 20, wherein said steps d), d'), e) and e') are carried out by a displacing apparatus (18) active on said first (19), second (20) and at least one third (40) auxiliary drum.

23. A method according to claim 1, wherein said working positions (A, B, C) of the finishing station (17) are angularly offset with one another.

24. A method according to any one of claims 22 or 23, wherein said auxiliary drums (19, 20, 40) are supported by a substantially turret-like displacing apparatus (18) at positions angularly offset with one another and wherein said steps from b4) to b6) are carried out by rotating said displacing apparatus (18) about a substantially vertical rotation axis (Y-Y).

25. A method according to claim 24, wherein at least one of said auxiliary drums (19, 20, 40) is slidably supported by said displacing apparatus (18) and wherein the method comprises the further step of translating said at least one auxiliary drum (19, 20, 40) towards the rotation axis (Y-Y) of the displacing apparatus (18) before carrying out said rotation step of said apparatus (18).

26. A method according to claim 1, wherein the picking position (D) of the cylindrical sleeve substantially coincides with said first working position (A).

27. A method according to claim 1, further comprising after said step c), the step of shaping according to a substantially toroidal shape said carcass structure (3) and said substantially cylindrical sleeve transferred at a radially outer position with respect to the same, so as to associate said sleeve to said carcass structure (3).

28. A method according to any one of claims 16 or 17, wherein the delivery of at least one of said continuous elongated elements (27, 28) is carried out by delivering a semifinished product of green elastomeric material in the form of a continuous strip by means of at least one of said delivery members (25, 26).

29. A plant (1) for manufacturing tyres for vehicle wheels comprising:
a) a building station (14) for building a substantially cylindrical carcass structure (3) comprising at least one carcass ply (10) operatively associated to annular anchoring structures (7) axially spaced apart from each other;
b) a finishing station (17) for manufacturing a substantially cylindrical sleeve comprising a tread band (5) applied at a radially outer position with respect to a belt structure (4) comprising at least one belt layer (11a, 11b, 12), said finishing station (17) comprising:
b1) a first auxiliary drum (19);
b2) a second auxiliary drum (20);
b3) at least one third auxiliary drum (40);
b4) a displacing apparatus (18) adapted to support said auxiliary drums (19, 20, 40) and to position said auxiliary drums (19, 20, 40) at a first working position (A) wherein said belt structure (4) is assembled, at a second working position (B) wherein at least one first portion of the tread band (5) is applied, at least a third working position (C) wherein at least one second portion of the tread band (5) is applied, at a picking position (D) of said substantially cylindrical sleeve; said first (A), second (B) and at least one third (C) working positions being defined in different zones of the finishing station (17);
b5) at least one first delivery member (25, 26) of a continuous elongated element (27, 28) of green elastomeric material arranged at said second working position (B) for operatively interacting with one of said auxiliary drums (19, 20, 40);
b6) at least one second delivery member (41) of a continuous elongated element (42) of green elastomeric material arranged at said at least one third working position (C) for operatively interacting with one of said auxiliary drums (19, 20, 40);
c) at least one transfer device (36) of the substantially cylindrical sleeve manufactured in the finishing station (17), adapted to operatively interact with one of said auxiliary drums (19, 20, 40) at said picking position (D) for transferring said substantially cylindrical sleeve at a radially outer position with respect to a carcass structure (3) built in the building station (14).

30. A plant (1) according to claim 29, further comprising at least one delivery device (24) of belt layers arranged at said first working position (A) for operatively interacting with one of said auxiliary drums (19, 20, 40).

31. A plant (1) according to any one of claims 29 or 30, further comprising at least one delivery device (22) of a strip-like element (23) of green elastomeric material including at least one reinforcing cord, arranged at said first working position (A) for operatively interacting with one of said auxiliary drums (19, 20, 40) to form a belt layer (12) including reinforcing cords substantially parallel to the circumferential development direction of the sleeve.

32. A plant (1) according to claim 29, comprising at least one further delivery device of a belt layer (13) comprising a plurality of reinforcing cords, arranged at said first working position (A) for operatively interacting with one of said auxiliary drums (19, 20, 40).

33. A plant (1) according to claim 29, further comprising at least one third delivery member of a respective third continuous elongated element of green elastomeric material arranged at said picking position (D) for operatively interacting with one of said auxiliary drums (19, 20, 40).

34. A plant (1) according to any one of claims 29 or 33, wherein said delivery members (25, 26, 41) of the continuous elongated elements (27, 28, 42) comprise at least one extruder (29, 30, 43).

35. A plant (1) according to any one of claims 29 or 33, wherein at least one of said delivery members (25, 26) of the continuous elongated elements (27, 28) delivers said continuous elongated element as a semifinished product of green elastomeric material in the form of a continuous strip.

36. A plant (1) according to claim 29, wherein said displacing apparatus (18) comprises at least one drum rotation unit (31, 32, 44) adapted to rotate the auxiliary drums (19, 20, 40) about a geometrical axis thereof.

37. A plant (1) according to claim 29, wherein said auxiliary drums (19, 20, 40) are slidably supported by said displacing apparatus (18).

38. A plant (1) according to any one of claims 29 or 33, wherein said displacing apparatus (18) comprises at least one drum translating unit (33, 34, 45) adapted to carry out controlled axial movements of said auxiliary drums (19, 20, 40) at said working positions (A, B, C) or at said picking position (D).

39. A plant (1) according to claim 29, wherein said displacing apparatus (18) is of the substantially turret-like type and is adapted to support said auxiliary drums (19, 20, 40) at positions angularly offset with one another.

40. A plant (1) according to claim 39, further comprising at least one driving unit (35) adapted to rotate said displacing apparatus (18) about a substantially vertical rotation axis (Y-Y).

41. A plant (1) according to claim 38, wherein said drum translating unit (33, 34, 45) of the displacing apparatus (18) translates said auxiliary drums (19, 20, 40) between said working positions (A, B, C) or said picking position (D) and a stand-by position defined between said working positions (A, B, C) or picking position (D) and a rotation axis (Y-Y) of the displacing apparatus (18).

42. A plant (1) according to claim 29, further comprising at least two delivery members (25, 26) of respective continuous elongated elements (27, 28) of green elastomeric material arranged at said second working position (B) for operatively interacting at opposite sides of one of said auxiliary drums (19, 20, 40).

43. A plant (1) according to claim 29, further comprising at least two delivery members of respective continuous elongated elements of green elastomeric material arranged at said at least one third working position (C) for operatively interacting at opposite sides of one of said auxiliary drums (19, 20, 40).

44. A plant (1) according to claim 29, wherein the picking position (D) of the cylindrical sleeve substantially coincides with said first working position (A).

45. A plant (1) according to claim 29, further comprising at least one apparatus for shaping said carcass structure (3) according to a substantially toroidal shape so as to associate the substantially cylindrical sleeve comprising the belt structure (4) and the tread band (5) to said carcass structure (3).

46. A plant for making tyres for vehicle wheels, comprising a manufacturing plant (1) according to any one of claims from 29 to 45 and at least one vulcanisation station for vulcanising the tyres obtained in said manufacturing plant (1).

## Patentansprüche

1. Verfahren zur Herstellung von Reifen für Fahrzeugräder, wobei das Verfahren die Schritte aufweist:
a) Aufbauen eines im Wesentlichen zylindrischen Karkassenaufbaus (3) mit wenigstens einer Karkassenlage (10), die axial voneinander beabstandeten ringförmigen Verankerungsaufbauten (7) funktionsmäßig zugeordnet sind, in einer Aufbaustation (14);
b) Herstellen einer im Wesentlichen zylindrischen Hülse mit einem Laufflächenband (5), das an einer radial äußeren Position bezüglich eines Gurtaufbaus (4) aufgebracht ist, der wenigstens eine Gurtlage (11a, 11b, 12) aufweist, in einer Fertigstellstation (17), wobei der Schritt b) die Schritte aufweist:
b1) Montieren eines ersten Gurtaufbaus (4) an einer ersten Arbeitsstelle (A) auf einer ersten Zusatztrommel (19) der Fertigstellstation (17);
b2) Aufbringen wenigstens eines ersten Teils des Laufflächenbandes (5) an einer zweiten Arbeitsstelle (B) an einer radial äußeren Position bezüglich eines zweiten Gurtaufbaus (4), der vorher auf einer zweiten Zusatztrommel (20) der Fertigstellstation (17) montiert wurde, wobei der Schritt des Aufbringens **dadurch** ausgeführt wird, dass entsprechend einer vorgegebenen Bahn wenigstens ein fortlaufendes langgestrecktes Element (27, 28) aus elastomerem Rohmaterial an einer radial äußeren Position bezüglich des zweiten Gurtaufbaus (4) abgelegt wird;
b3) Aufbringen wenigstens eines zweiten Teils des Laufflächenbandes (5) an wenigstens einer dritten Arbeitsstelle (C) an einer radial äußeren Position bezüglich eines dritten Gurtaufbaus (4), der auf wenigstens einer dritten Zusatztrommel (40) der Fertigstellestation (17) montiert wurde, wobei der Schritt des Aufbringens **dadurch** ausgeführt wird, dass entsprechend einer vorgegebenen Bahn wenigstens ein fortlaufendes langgestrecktes Element (42) eines elastomeren Rohmaterials an einer radial äußeren Position bezüglich des dritten Gurtaufbaus (4) abgelegt wird;
b4) Anordnen der ersten Zusatztrommel (19), die den ersten Gurtaufbau (4) trägt, an der zweiten Arbeitsstelle (B);
b5) Anordnen der zweiten Zusatztrommel (20), die den zweiten Gurtaufbau (4) und wenigstens einen Teil des Laufflächenbandes (5) trägt, an der dritten Arbeitsstelle (C);
b6) Anordnen der wenigstens einen dritten Zusatztrommel (40), die die so erhaltene, im Wesentlichen zylindrische Hülse trägt, an einer Aufnahmenstelle (D) der Fertigstellstation (17); und
c) Überführen der im Wesentlichen zylindrischen Hülse von der Aufnahmestelle (D) der Fertigstellstation (17) an einer radial äußeren Position bezüglich eines Karkassenaufbaus (3), der inzwischen in der Aufbaustation (14) aufgebaut wurde, wobei
- die Schritte b1) bis b6) zyklisch wiederholt werden;
- die Schritte b1) bis b3) wenigstens zum Teil gleichzeitig miteinander ausgeführt werden; und
- die Schritte b4) bis b6) wenigstens zum Teil gleichzeitig miteinander ausgeführt werden.

2. Verfahren nach Anspruch 1, bei welchem die Schritte b) und c) in einem Zeitintervall ausgeführt werden, das im Wesentlichen der Zeit zur Ausführung des Schritts a) des Aufbaus des Karkassenaufbaus (3) entspricht oder kleiner als dieses ist.

3. Verfahren nach Anspruch 1, bei welchem der Schritt b1) weiterhin die Schritte aufweist:
i) Aufbringen an einer radial äußeren Position bezüglich der ersten Zusatztrommel (19) einer ersten Gurtlage (11a) mit ersten Verstärkungskorden, die bezüglich der Umfangsabwicklungsrichtung der Hülse geneigt sind; und
ii) Aufbringen an einer radial äußeren Position bezüglich der ersten Gurtlage einer zweiten Gurtlage (11b), die zweite Verstärkungskorde aufweist, die längs einer sich in Bezug auf die ersten Verstärkungskorde kreuzenden Richtung geneigt sind.

4. Verfahren nach Anspruch 3, bei welchem der Schritt b1) den folgenden Schritt aufweist:
iii) Aufbringen an einer radial äußeren Position bezüglich der ersten Zusatztrommel (19) eines streifenförmigen Elements (23) aus elastomerem Rohmaterial, das wenigstens einen Verstärkungskord zur Bildung axial benachbarter Umfangswindungen aufweist, so dass sich eine Gurtlage (12) mit Verstärkungskorden ergibt, die im Wesentlichen parallel zur Umfangsabwicklungsrichtung der Hülse sind.

5. Verfahren nach Anspruch 4, bei welchem das streifenförmige Element (23) aus elastomerem Rohmaterial an einer radial äußeren Position bezüglich der zweiten Gurtlage (11b) aufgebracht wird.

6. Verfahren nach einem der Ansprüche 1, 3, 4 oder 5, bei welchem der Schritt b1) weiterhin den Schritt aufweist
iv) Aufbringen einer weiteren Lage (13) aus elastomerem Rohmaterial an einer radial äußeren Position bezüglich der wenigstens einen Gurtlage (11a, 11b, 12), wobei die Lage (13) eine Vielzahl von Verstärkungskorden aufweist.

7. Verfahren nach Anspruch 1, bei welchem der Schritt b2) an der zweiten Arbeitsstelle (B) **dadurch** ausgeführt wird, dass entsprechend den jeweiligen vorgegebenen Bahnen an einer radial äußeren Position bezogen auf den zweiten Gurtaufbau (4) ein erstes (27) und ein zweites (28) fortlaufendes langgestrecktes Element aus elastomerem Rohmaterial abgelegt werden.

8. Verfahren nach Anspruch 7, bei welchem der Schritt b2) an der zweiten Arbeitsstelle (B) **dadurch** ausgeführt wird, dass das erste fortlaufende langgestreckte Element (27) aus elastomerem Rohmaterial an einer radial äußeren Position bezogen auf den zweiten Gurtaufbau (4) längs im Wesentlichen seiner ganzen Querabwicklung so abgelegt wird, dass eine radial innere Schicht des Laufflächenbandes (5) gebildet wird.

9. Verfahren nach Anspruch 8, bei welchem der Schritt b2) an der zweiten Arbeitsstelle (B) **dadurch** ausgeführt wird, dass ein zweites fortlaufendes langgestrecktes Element (28) an einer radial äußeren Position bezogen auf wenigstens einen Teil der radial inneren Schicht des Laufflächenbandes (5) so abgelegt wird, dass ein entsprechender Teil einer radial äußeren Schicht des Laufflächenbandes (5) gebildet wird.

10. Verfahren nach Anspruch 9, bei welchem der Schritt b3) **dadurch** ausgeführt wird, dass an der dritten Arbeitsstelle (C) wenigstens ein drittes fortlaufendes langgestrecktes Element (42) aus elastomerem Rohmaterial an einer axial ausgerichteten Position bezüglich des wenigstens einen Teils einer radial äußeren Schicht des Laufflächenbandes (5) abgelegt wird, das von dem zweiten fortlaufenden langgestreckten Element (28) gebildet wird, so dass ein weiterer Teil der radial äußeren Schicht des Laufflächenbandes (5) gebildet wird.

11. Verfahren nach Anspruch 7, bei welchem der Schritt b2) an der zweiten Arbeitsstelle (B) **dadurch** ausgeführt wird, dass das erste fortlaufende langgestreckte Element (27) an einer radial äußeren Position bezüglich wenigstens eines Teils des zweiten Gurtaufbaus (4) so abgelegt wird, dass ein entsprechender Teil einer radial inneren Schicht des Laufflächenbandes (5) gebildet wird.

12. Verfahren nach Anspruch 11, bei welchem der Schritt b2) an der zweiten Arbeitsstelle (B) **dadurch** ausgeführt wird, dass ein zweites fortlaufendes langgestrecktes Element (28) an einer axial ausgerichteten Position bezüglich des wenigstens einen Teils einer radial inneren Schicht des Laufflächenbandes (5) abgelegt wird, die von dem ersten fortlaufenden langgestreckten Element (27) gebildet wird, so dass ein weiterer Teil der radial inneren Schicht des Laufflächenbandes (5) gebildet wird.

13. Verfahren nach Anspruch 12, bei welchem der Schritt b3) **dadurch** ausgeführt wird, dass an der dritten Arbeitsstelle (C) wenigstens ein drittes fortlaufendes langgestrecktes Element (42) aus elastomerem Rohmaterial an einer radial äußeren Position bezüglich der radial inneren Schicht des Laufflächenbandes (5) längs im Wesentlichen seiner ganzen Querabwicklung abgelegt wird, um eine radial äußere Schicht des Laufflächenbandes (5) zu bilden.

14. Verfahren nach Anspruch 1, bei welchem der Schritt b) weiterhin den Schritt aufweist: b7) Aufbringen entsprechend einer jeweils vorgegebenen Bahn eines weiteren fortlaufenden langgestreckten Elements aus elastomerem Rohmaterial an der Aufnahmestelle (D) an einer radial äußeren Position bezüglich des dritten Gurtaufbaus (4).

15. Verfahren nach einem der Ansprüche 7 bis 14, bei welchem das erste (27) und das zweite (28) fortlaufende langgestreckte Element auf gegenüberliegenden Seiten der zweiten Zusatztrommel (20) abgelegt werden.

16. Verfahren nach Anspruch 1, bei welchem die Schritte b2) und b3) **dadurch** ausgeführt werden, dass die fortlaufenden langgestreckten Elemente (27, 28, 42) von entsprechenden Lieferelementen (25, 26, 41), die an der zweiten (B) und an der wenigstens einen dritten (C) Arbeitsstelle in der Nähe der zweiten (20) und der wenigstens einen dritten (40) Zusatztrommel angeordnet sind, geliefert und gleichzeitig die fortlaufenden langgestreckten Elemente (27, 28, 41) auf die Trommeln (20, 40) gewickelt werden.

17. Verfahren nach Anspruch 14, bei welchem der Schritt b7) **dadurch** ausgeführt wird, dass ein weiteres fortlaufendes langgestrecktes Element von einem entsprechenden Lieferelement, das an der Aufnahmestelle (D) nahe an der Zusatztrommel (40) angeordnet ist, geliefert und gleichzeitig das fortlaufende langgestreckte Element auf die Trommel (40) gewickelt wird.

18. Verfahren nach Anspruch 16 oder 17, bei welchem das Liefern des fortlaufenden langgestreckten Elements (27, 28, 42) durch Extrusion durch die Lieferelemente (25, 26, 41) ausgeführt wird.

19. Verfahren nach Anspruch 16, bei welchem der Schritt b2) **dadurch** bewirkt wird, dass gleichzeitig zum Aufbringen des wenigstens einen fortlaufenden langgestreckten Elements (27, 28, 42) die Schritte ausgeführt werden:
d) Erteilen wenigstens einer der ersten (19) oder zweiten (20) Zusatztrommel, die den ersten oder zweiten Gurtaufbau (4) trägt, einer Drehbewegung um ihre geometrische Achse, so dass das wenigstens eine langgestreckte Element (27, 28) auf dem ersten oder zweiten Gurtaufbau (4) am Umfang verteilt wird; und
e) Ausführen von gesteuerten Relativverschiebungen zwischen der wenigstens einen Zusatztrommel (19, 20) und dem Lieferelement (25, 26), um mit dem wenigstens einen fortlaufenden langgestreckten Element (27, 28) eine Vielzahl von Windungen zu bilden, die in einer gegenseitigen Beziehung Seite an Seite zur Bildung des wenigstens einen Teils des Laufflächenbandes (5) angeordnet sind.

20. Verfahren nach Anspruch 16 oder 17, bei welchem die Schritte b3) und b7) **dadurch** bewirkt werden, dass gleichzeitig zum Aufbringen der fortlaufenden langgestreckten Elemente (27, 28, 42) die Schritte ausgeführt werden:
d') Erteilen der wenigstens einen dritten Zusatztrommel (40), die den dritten Gurtaufbau (4) trägt, einer Drehbewegung um ihre geometrische Achse, so dass das wenigstens eine fortlaufende langgestreckte Element (42) an einer radial äußeren Position bezüglich des dritten Gurtaufbaus (4) am Umfang verteilt wird, und
e') Ausführen von gesteuerten Relativverschiebungen zwischen der wenigstens einen dritten Zusatztrommel (40) und dem Lieferelement (41), um mit dem wenigstens einen fortlaufenden langgestreckten Element (42) eine Vielzahl von Windungen zu bilden, die in einer gegenseitigen Beziehung Seite an Seite zur Bildung wenigstens eines radial äußeren Teils des Laufflächenbandes (5) angeordnet sind.

21. Verfahren nach Anspruch 19 oder 20, bei welchem die Verschiebungen **dadurch** ausgeführt werden, dass die erste (19) oder die zweite (20) Zusatztrommel oder die wenigstens eine dritte Zusatztrommel (40) bezüglich der Lieferelemente (25, 26, 41) bewegt wird.

22. Verfahren nach Anspruch 19 oder 20, bei welchem die Schritte d), d'), e) und e') durch eine Verschiebeeinrichtung (18) ausgeführt werden, die an der ersten (19), der zweiten (20) und der wenigstens einen dritten (40) Zusatztrommel aktiv ist.

23. Verfahren nach Anspruch 1, bei welchem die Arbeitsstellen (A, B, C) der Fertigstellstation (17) zueinander im Winkel versetzt sind.

24. Verfahren nach Anspruch 22 oder 23, bei welchem die Zusatztrommeln (19, 20, 40) von einer im Wesentlichen drehtischartigen Verschiebeeinrichtung (18) an Positionen gehalten werden, die zueinander im Winkel versetzt sind, wobei die Schritte von b4) bis b6) **dadurch** ausgeführt werden, dass die Verschiebeeinrichtung (18) um eine im Wesentlichen vertikale Drehachse (Y-Y) gedreht wird.

25. Verfahren nach Anspruch 24, bei welchem wenigstens eine der Zusatztrommeln (19, 20, 40) von der Verschiebeeinrichtung (18) verschiebbar gehalten ist, und wobei das Verfahren den weiteren Schritt aufweist, die wenigstens eine Zusatztrommel (19, 20, 40) zu der Drehachse (Y-Y) der Verschiebevorrichtung (18) hin zu verschieben, ehe der Drehschritt der Einrichtung (18) ausgeführt wird.

26. Verfahren nach Anspruch 1, bei welchem die Aufnahmestelle (D) der zylindrischen Hülse im Wesentlichen mit der ersten Arbeitsstelle (A) zusammenfällt.

27. Verfahren nach Anspruch 1, das nach dem Schritt c) weiterhin den Schritt aufweist, dem Karkassenaufbau (3) und der im Wesentlichen zylindrischen Hülse, die an eine radial äußere Position bezogen auf diesen überführt ist, im Wesentlichen eine Torusform zu geben, um die Hülse dem Karkassenaufbau (3) zuzuordnen.

28. Verfahren nach Anspruch 16 oder 17, bei welchem die Lieferung wenigstens eines der fortlaufenden langgestreckten Elemente (27, 28) **dadurch** ausgeführt wird, dass ein Halbfabrikat aus elastomerem Rohmaterial in Form eines fortlaufenden Streifens mit Hilfe wenigstens eines der Lieferelemente (25, 26) geliefert wird.

29. Anlage (1) zur Herstellung von Reifen für Fahrzeugräder
a) mit einer Aufbaustation (14) zum Aufbauen eines im Wesentlichen zylindrischen Karkassenaufbaus (3), der wenigstens eine Karkassenlage (10) aufweist, die axial voneinander beabstandeten, ringförmigen Verankerungsaufbauten (7) funktionsmäßig zugeordnet ist,
b) mit einer Fertigstellstation (17) zur Herstellung einer im Wesentlichen zylindrischen Hülse, die ein Laufflächenband (5) aufweist, das an einer radial äußeren Position bezüglich eines Gurtaufbaus (4) aufgebracht ist, der wenigstens eine Gurtlage (11a, 11b, 12) hat, wobei die Fertigstellstation (17)
b1) eine erste Zusatztrommel (19);
b2) eine zweite Zusatztrommel (20);
b3) wenigstens eine dritte Zusatztrommel (40);
b4) eine Verschiebeeinrichtung (18), die so angepasst ist, dass sie die Zusatztrommeln (19, 20, 40) trägt und an einer ersten Arbeitsstelle (A), an der der Gurtaufbau (4) montiert wird, an einer zweiten Arbeitsstelle (B), an der wenigstens ein erster Teil des Laufflächenbandes (5) aufgebracht wird, an wenigstens einer dritten Arbeitsstelle (C), an der wenigstens ein zweiter Teil des Laufflächenbandes (5) aufgebracht wird, und an einer Aufnahmestelle (D) der im Wesentlichen zylindrischen Hülse positioniert, wobei die erste (A), die zweite (B) und die wenigstens eine dritte (C) Arbeitsstelle in verschiedenen Zonen der Fertigstellstation (17) ausgebildet sind;
b5) wenigstens ein erstes Lieferelement (25, 26) für ein fortlaufendes langgestrecktes Element (27, 28) aus elastomerem Rohmaterial, das an der zweiten Arbeitsstelle (B) für ein funktionsmäßiges Zusammenwirken mit einer der Zusatztrommeln (19, 20, 40) angeordnet ist; und
b6) wenigstens ein zweites Lieferelement (41) für ein fortlaufendes langgestrecktes Element (42) aus elastomerem Rohmaterial aufweist, das an der wenigstens einen dritten Arbeitsstelle (C) für ein funktionsmäßiges Zusammenwirken mit einer der Zusatztrommeln (19, 20, 40) angeordnet ist, und
c) mit wenigstens einer Überführungseinrichtung (36) für die im Wesentlichen zylindrische, in der Fertigstellstation (17) hergestellte Hülse, wobei die Überführungseinrichtung für ein funktionsmäßiges Zusammenwirken mit einer der Zusatztrommeln (19, 20, 40) an der Aufnahmestelle (D) zum Überführen der im Wesentlichen zylindrischen Hülse an eine radial äußere Position bezogen auf einen Karkassenaufbau (3) angepasst ist, der in der Aufbaustation (14) aufgebaut wurde.

30. Anlage (1) nach Anspruch 29, welche weiterhin wenigstens eine Liefereinrichtung (24) für Gurtlagen aufweist, die an der ersten Arbeitsstelle (A) für ein funktionsmäßiges Zusammenwirken mit einer der Zusatztrommeln (19, 20,40) angeordnet ist.

31. Anlage (1) nach Anspruch 29 oder 30, welche weiterhin wenigstens eine Liefereinrichtung (22) für ein streifenförmiges Element (23) aus elastomerem Rohmaterial mit wenigstens einem Verstärkungskord aufweist, wobei die Liefereinrichtung an der ersten Arbeitsstelle (A) für ein funktionsmäßiges Zusammenwirken mit einer der Zusatztrommeln (19, 20, 40) zur Bildung einer Gurtlage (12) mit Verstärkungskorden angeordnet ist, die im Wesentlichen parallel zu der Umfangsabwicklungsrichtung der Hülse sind.

32. Anlage (1) nach Anspruch 29 mit wenigstens einer weiteren Liefereinrichtung für eine Gurtlage (13), die ein Vielzahl von Verstärkungskorden aufweist, wobei die weitere Liefereinrichtung an der ersten Arbeitsstelle (A) für ein funktionsmäßiges Zusammenwirken mit einer der Zusatztrommeln (19, 20, 40) angeordnet ist.

33. Anlage (1) nach Anspruch 29, welche weiterhin wenigstens ein drittes Lieferelement für ein entsprechendes drittes fortlaufendes langgestrecktes Element aus elastomerem Rohmaterial aufweist, wobei das wenigstens eine dritte Lieferelement an der Aufnahmestelle (D) für ein funktionsmäßiges Zusammenwirken mit einer der Zusatztrommeln (19, 20, 40) angeordnet ist.

34. Anlage (1) nach Anspruch 29 oder 33, wobei die Lieferelemente (25, 26, 41) für die fortlaufenden langgestreckten Elemente (27, 28, 42) wenigstens einen Extruder (29, 30, 43) aufweisen.

35. Anlage (1) nach Anspruch 29 oder 33, bei welcher wenigstens eines der Lieferelemente (25, 26) für die fortlaufenden langgestreckten Elemente (27, 28) das fortlaufende langgestreckte Element als Halbfabrikat aus elastomerem Rohmaterial in Form eines fortlaufenden Streifens liefert.

36. Anlage (1) nach Anspruch 29, bei welcher die Verschiebeeinrichtung (18) wenigstens eine Trommeldreheinheit (31, 32, 44) aufweist, die so angepasst ist, dass sie die Zusatztrommeln (19, 20, 40) um ihre geometrische Achse dreht.

37. Anlage (1) nach Anspruch 29, bei welcher die Zusatztrommeln (19, 20, 40) von der Verschiebeeinrichtung (18) verschiebbar gehalten sind.

38. Anlage (1) nach Anspruch 29 oder 33, bei welcher die Verschiebeeinrichtung (18) wenigstens eine Trommelverschiebeeinheit (33, 34, 45) aufweist, die so angepasst ist, dass sie gesteuerte Axialbewegungen der Zusatztrommeln (19, 20, 40) an den Arbeitsstellen (A, B, C) oder an der Aufnahmestelle (D) ausführt.

39. Anlage (1) nach Anspruch 29, bei welcher die Verschiebeeinrichtung (18) eine im Wesentlichen drehtischförmige Bauweise hat und so angepasst ist, dass sie die Zusatztrommeln (19, 20.40) an im Winkel zueinander versetzten Positionen trägt.

40. Anlage (1) nach Anspruch 39, welche weiterhin wenigstens eine Antriebseinheit (35) aufweist, die für ein Drehen der Verschiebeeinrichtung (18) um eine im Wesentlichen vertikale Drehachse (Y-Y) angepasst ist.

41. Anlage (1) nach Anspruch 38, bei welcher die Trommelverschiebeeinheit (33, 34, 45) der Verschiebeeinrichtung (18) die Zusatztrommeln (19, 20, 40) zwischen den Arbeitsstellen (A, B, C) oder der Aufnahmestelle (D) und einer zwischen den Arbeitsstellen (A, B, C) oder der Aufnahmestelle (D) und einer Drehachse (Y-Y) der Verschiebeeinrichtung (18) gebildeten Bereitschaftsstelle verschiebt.

42. Anlage (1) nach Anspruch 29, welche weiterhin wenigstens zwei Lieferelemente (25, 26) für jeweilige fortlaufende langgestreckte Elemente (27, 28) aus elastomerem Rohmaterial aufweist, wobei die Lieferelemente an der zweiten Arbeitsstelle (B) für ein funktionsmäßiges Zusammenwirken auf gegenüberliegenden Seiten einer der Zusatztrommeln (19, 20, 40) angeordnet sind.

43. Anlage (1) nach Anspruch 29, welche weiterhin wenigstens zwei Lieferelemente für jeweilige fortlaufende langgestreckte Elemente aus elastomerem Rohmaterial aufweist, wobei die Lieferelemente an wenigstens einer dritten Arbeitsstelle (C) für ein funktionsmäßiges Zusammenwirken auf gegenüberliegenden Seiten einer der Zusatztrommeln (19, 20, 40) angeordnet sind.

44. Anlage (1) nach Anspruch 29, bei welcher die Aufnahmestelle (D) der zylindrischen Hülse im Wesentlichen mit der ersten Arbeitsstelle (A) zusammenfällt.

45. Anlage (1) nach Anspruch 29, welche weiterhin wenigstens eine Einrichtung aufweist, um dem Karkassenaufbau (3) eine Torusform zu geben, um die im Wesentlichen zylindrische Hülse mit dem Gurtaufbau (4) und dem Laufflächenband (5) dem Karkassenaufbau (3) zuzuordnen.

46. Anlage zur Herstellung von Reifen für Fahrzeugräder mit einer Fertigungsanlage (1) nach einem der Ansprüche 29 bis 45 und wenigstens einer Vulkanisierstation zum Vulkanisieren der aus der Fertigungsanlage (1) erhaltenen Reifen.

## Revendications

1. Procédé de fabrication de pneumatiques pour roues de véhicules comprenant les étapes consistant à :
a) réaliser dans un poste de construction (14) une structure de carcasse substantiellement cylindrique (3) comprenant au moins une couche de carcasse (10) associée fonctionnellement à des structures d'ancrage annulaires (7) espacées axialement les unes des autres ;
b) fabriquer dans un poste de finition (17) un manchon substantiellement cylindrique comprenant une bande de roulement (5) appliquée à un emplacement radialement extérieur par rapport à une structure de ceinture (4) comprenant au moins une couche de ceinture (11a, 11b, 12), ladite étape b) comprenant les opérations consistant à :
b1) assembler une première structure de ceinture (4) dans un premier emplacement de travail (A), sur un tambour auxiliaire (19) du poste de finition (17) ;
b2) appliquer au moins une première partie de la bande de roulement (5) dans un deuxième emplacement de travail (B) à un emplacement radialement extérieur par rapport à une deuxième structure de ceinture (4) assemblée précédemment sur un deuxième tambour auxiliaire (20) du poste de finition (17) ; ladite opération d'application étant exécutée en déposant selon un chemin prédéterminé au moins un élément oblong continu (27, 28) en matériau élastomère cru, à un emplacement radialement extérieur par rapport à ladite deuxième structure de ceinture (4) ;
b3) appliquer au moins une deuxième partie de la bande de roulement (5) dans au moins un troisième emplacement de travail (C) à un emplacement radialement extérieur par rapport à une troisième structure de ceinture (4) assemblée sur au moins un troisième tambour auxiliaire (40) du poste de finition (17), ladite opération d'application étant exécutée en déposant selon un chemin déterminé au moins un élément oblong continu (42) en matériau élastomère cru, à un emplacement radialement extérieur par rapport à ladite troisième structure de ceinture (4) ;
b4) positionner le premier tambour auxiliaire (19) supportant la première structure de ceinture (4) dans ledit deuxième emplacement de travail (B) ;
b5) positionner le deuxième tambour auxiliaire (20) supportant la deuxième structure de ceinture (4) et ladite au moins une partie de la bande de roulement (5) dans ledit troisième emplacement de travail (C) ;
b6) positionner ledit au moins un tambour auxiliaire (40) supportant le manchon substantiellement cylindrique ainsi obtenu à un emplacement de prélèvement (D) du poste de finition (17).
c) transférer ledit manchon substantiellement cylindrique dudit emplacement de prélèvement (D) du poste de finition (17) à un emplacement radialement extérieur par rapport à une carcasse de structure (3) réalisée entre temps dans le poste de construction (14) ;
lesdites opérations de b1) à b6) étant répétées cycliquement ;
les opérations de b1) à b3) étant exécutées au moins partiellement simultanément les unes aux autres ; et
les opérations de b4) à b6) étant exécutées au moins partiellement simultanément les unes aux autres.

2. Procédé selon la revendication 1, dans lequel lesdites étapes b) et c) sont exécutées dans un intervalle de temps sensiblement égal, ou inférieur au temps utilisé pour exécuter ladite étape a) de réalisation de la structure de carcasse (3),

3. Procédé selon la revendication 1, dans lequel ladite opération b1) comprend en outre les opérations consistant à :
i) appliquer, à un emplacement radialement extérieur par rapport au premier tambour auxiliaire (19), une première couche de ceinture (11a) comprenant des premiers câbles de renforcement obliques par rapport à la direction circonférentielle de développement du manchon ; et
ii) appliquer, à un emplacement radialement extérieur par rapport à la première couche de ceinture, une deuxième couche de ceinture (11b) comprenant des deuxièmes câbles de renforcement obliques le long d'une direction croisée par rapport auxdits premiers câbles de renforcement.

4. Procédé selon la revendication 3, dans lequel ladite opération b1) comprend en outre l'opération consistant à :
iii) appliquer, à un emplacement radialement extérieur par rapport au premier tambour auxiliaire (19), un élément analogue à une bande (23) de matériau élastomère cru comprenant au moins un câble de renforcement, de manière à former des enroulements circonférentiels axialement contigus, de façon à obtenir une couche de ceinture (12) comprenant des câbles de renforcement substantiellement parallèles à la direction circonférentielle de développement du manchon.

5. Procédé selon la revendication 4, dans lequel ledit élément analogue à une bande (23) de matériau élastomère cru est appliqué à un emplacement radialement extérieur par rapport à la deuxième couche de ceinture (11b).

6. Procédé selon l'une quelconque des revendications 1, 3, 4 ou 5, dans lequel ladite opération b1) comprend en outre l'opération consistant à :
iv) appliquer une couche supplémentaire (13) de matériau élastomère cru, à un emplacement radialement extérieur par rapport à ladite au moins une couche de ceinture (11a, 11b, 12), ladite couche (13) comprenant une pluralité de câbles de renforcement.

7. Procédé selon la revendication 1, dans lequel ladite opération b2) est exécutée audit deuxième emplacement de travail (B) en déposant selon des chemins prédéterminés respectifs, à un emplacement radialement extérieur par rapport à ladite deuxième structure de ceinture (4), un premier (27) et un deuxième (28) éléments oblongs continus de matériau élastomère cru.

8. Procédé selon la revendication 7, dans lequel ladite opération b2) est exécutée audit deuxième emplacement de travail (B) en déposant ledit premier élément oblong continu (27) de matériau élastomère cru à un emplacement radialement extérieur par rapport à ladite deuxième structure de ceinture (4) sur sensiblement tout le développement transversal de celle-ci de manière à former une couche radialement intérieure de la bande de roulement (5).

9. Procédé selon la revendication 8, dans lequel ladite opération b2) est exécutée audit deuxième emplacement de travail (B) en déposant un deuxième élément oblong continu (28) à un emplacement radialement extérieur par rapport à au moins une partie de ladite couche radialement intérieure de la bande de roulement (5) de manière à former une partie correspondante d'une couche radialement extérieure de la bande de roulement (5).

10. Procédé selon la revendication 9, dans lequel ladite opération b3) est exécutée en déposant audit troisième emplacement de travail (C) au moins un troisième élément oblong continu (42) de matériau élastomère cru à un emplacement aligné axialement par rapport à ladite au moins une partie d'une couche radialement extérieure de la bande de roulement (5) constituée par ledit deuxième élément oblong continu (28) de manière à former une autre partie de la couche radialement extérieure de la bande de roulement (5).

11. Procédé selon la revendication 7, dans lequel ladite opération b2) est exécutée audit deuxième emplacement de travail (B) en déposant ledit premier élément oblong continu (27) à un emplacement radialement extérieur par rapport à au moins une partie de ladite deuxième structure de ceinture (4) de manière à réaliser une partie correspondante d'une couche radialement intérieure de la bande de roulement (5).

12. Procédé selon la revendication 11, dans lequel ladite opération b2) est exécutée audit deuxième emplacement de travail (B) en déposant un deuxième élément oblong continu (28) à un emplacement en alignement axial par rapport à ladite au moins une partie d'une couche radialement intérieure de la bande de roulement (5) formée par ledit premier élément oblong continu (27), de manière à réaliser une partie supplémentaire de la couche radialement intérieure de la bande de roulement (5).

13. Procédé selon la revendication 12, dans lequel ladite opération b3) est exécutée en déposant audit troisième emplacement de travail (C) au moins un troisième élément oblong continu (42) en matériau élastomère cru, à un emplacement radialement extérieur par rapport à la couche radialement intérieure de la bande de roulement (5) sur substantiellement la totalité du développement transversal de celle-ci de manière à réaliser une couche radialement extérieure de la bande de roulement (5).

14. Procédé selon la revendication 1, dans lequel ladite étape b) comprend en outre l'opération consistant à :
b7) appliquer selon un chemin respectif prédéterminé un élément oblong continu supplémentaire en matériau élastomère cru audit emplacement de prélèvement (D) à un emplacement radialement extérieur par rapport à ladite troisième structure de ceinture (4).

15. Procédé selon l'une quelconque des revendications 7 à 14, dans lequel ledit premier (27) et ledit deuxième (28) éléments oblongs continus sont déposés sur des côtés opposés du deuxième tambour auxiliaire (20).

16. Procédé selon la revendication 1, dans lequel lesdites opérations b2) et b3) sont exécutées en amenant lesdits éléments oblongs continus (27, 28, 42) depuis des éléments de délivrance respectifs (25, 26, 41) agencés audit deuxième (B) et audit au moins un troisième (C) emplacements de travail, à proximité dudit deuxième tambour auxiliaire (20) et d'au moins un troisième tambour auxiliaire (40), simultanément à l'enroulement des éléments oblongs continus (27, 28, 42) sur lesdits tambours (20, 40).

17. Procédé selon la revendication 14, dans lequel ladite opération b7) est exécutée en amenant ledit élément oblong continu supplémentaire depuis un élément de délivrance respectif agencé audit emplacement de prélèvement (D) à proximité dudit troisième tambour auxiliaire (40) simultanément à l'enroulement de l'élément oblong continu sur ledit tambour (40).

18. Procédé selon l'une quelconque des revendications 16 ou 17, dans lequel la délivrance desdits éléments oblongs continus (27, 28, 42) est exécutée par extrusion à travers lesdits éléments de délivrance (25, 26, 41).

19. Procédé selon la revendication 16, dans lequel ladite opération b2) est effectuée simultanément à l'application dudit au moins un élément oblong continu (27, 28, 42), les opérations consistant à :
d) impartir à au moins un desdits premier (19) ou deuxième (20) tambours auxiliaires portant la première ou la deuxième structure de ceinture (4) un mouvement de rotation sur son axe géométrique, de manière à répartir circonférentiellement ledit au moins un élément oblong continu (27, 28) sur ladite première ou deuxième structure de ceinture (4) ;
e) exécuter des déplacements relatifs commandés entre ledit au moins un tambour auxiliaire (19, 20) et l'élément de délivrance (25, 26) afin de former avec ledit au moins un élément oblong continu (27, 28) une pluralité de spires disposées côte à côte pour définir au moins une partie de la bande de roulement (5).

20. Procédé selon l'une quelconque des revendications 16 ou 17, dans lequel les opérations b3) et b7) sont effectuées en exécutant, simultanément à l'application desdits éléments oblongs continus (27, 28, 42), les opérations consistant à :
d') impartir audit au moins un troisième tambour auxiliaire (40) portant la troisième structure de ceinture (4) un mouvement de rotation sur son axe géométrique, de manière à répartir circonférentiellement ledit au moins un élément oblong continu (42) à un emplacement radialement extérieur par rapport à la troisième structure de ceinture (4) ;
e') exécuter des déplacements relatifs commandés entre ledit au moins un troisième tambour auxiliaire (40) et l'élément de délivrance (41) pour former avec ledit au moins un élément oblong continu (42) une pluralité de spires disposées côte à côte pour définir au moins une partie radialement extérieure de la bande de roulement (5).

21. Procédé selon l'une quelconque des revendications 19 ou 20, dans lequel lesdits déplacements sont exécutés en déplaçant le premier (19) ou le deuxième (20) tambour auxiliaire ou ledit au moins un troisième tambour auxiliaire (40) par rapport auxdits éléments de délivrance (25, 26, 41).

22. Procédé selon l'une quelconque des revendications 19 ou 20, dans lequel lesdites opérations d), d'), e) et e') sont exécutées par un dispositif de déplacement (18) actif sur lesdits premier (19), deuxième (20) et au moins un troisième (40) tambours auxiliaires (40).

23. Procédé selon la revendication 1, dans lequel lesdits emplacements de travail (A, B, C) du poste de finition (17) sont décalés angulairement les uns par rapport aux autres.

24. Procédé selon l'une quelconque des revendications 22 ou 23, dans lequel lesdits tambours auxiliaires (19, 20, 40) sont supportés par un dispositif de déplacement (18) substantiellement analogue à un touret à des emplacements décalés angulairement les uns par rapport aux autres, et dans lequel lesdites opérations de b4) à b6) sont exécutées en faisant tourner ledit dispositif de déplacement (18), sur un axe de rotation (Y-Y) substantiellement vertical.

25. Procédé selon la revendication 24, dans lequel au moins un desdits tambours auxiliaires (19, 20, 40) est supporté de manière coulissante par ledit dispositif de déplacement (18) et ledit procédé comprenant l'opération supplémentaire consistant à déplacer en translation ledit au moins un tambour auxiliaire (19, 20, 40) en direction de l'axe de rotation (Y-Y) du dispositif de déplacement (18) avant l'exécution de ladite opération de rotation dudit dispositif (18).

26. Procédé selon la revendication 1, dans lequel l'emplacement de prélèvement (D) du manchon cylindrique coïncide substantiellement avec le premier emplacement de travail (A).

27. Procédé selon la revendication 1 comprenant en outre après ladite étape c) l'étape de mise en forme de ladite structure de carcasse (3), aboutissant à lui conférer une forme substantiellement toroïdale et l'étape de transfert dudit manchon substantiellement cylindrique à un emplacement radialement extérieur par rapport à celle-ci, de manière à associer ledit manchon et ladite structure de carcasse (3).

28. Procédé selon l'une quelconque des revendications 16 ou 17, dans lequel la délivrance d'au moins un desdits éléments allongés continus (27, 28) est exécutée en délivrant un produit semi-fini en matériau élastomère cru sous la forme d'une bande continue au moyen d'au moins un desdits éléments de délivrance (25, 26).

29. Installation (1) de fabrication de pneumatiques pour roues de véhicules, comprenant :
a) un poste de réalisation (14) destiné à la construction d'une structure (3) de carcasse substantiellement cylindrique comprenant au moins une couche de carcasse (10) associée fonctionnellement à des structures d'ancrage annulaires (7) espacées axialement les unes des autres ;
b) un poste de finition (17) destiné à la fabrication d'un manchon substantiellement cylindrique comprenant une bande de roulement (5) appliquée à un emplacement radialement extérieur par rapport à une structure de ceinture (4) comprenant au moins une couche de ceinture (11a, 11b, 12), ledit poste de finition (17) comprenant :
b1) un premier tambour auxiliaire (19) ;
b2) un deuxième tambour auxiliaire (20) ;
b3) au moins un troisième tambour auxiliaire (40) ;
b4) un dispositif de déplacement (18) apte à supporter lesdits tambours auxiliaires (19, 20, 40) et à positionner lesdits tambours auxiliaires (19, 20, 40) à un premier emplacement de travail (A), ladite structure de ceinture (4) étant assemblée à un deuxième emplacement de travail (B), au moins une première partie de la bande de roulement (5) étant appliquée à au moins un troisième emplacement de travail (C) et au moins une deuxième partie de la bande de roulement (5) étant appliquée à un emplacement de prélèvement (D) dudit manchon substantiellement cylindrique ; lesdits premier (A), deuxième (B) et au moins un troisième (C) emplacements de travail étant définis dans différentes zones du poste de finition (17) ;
b5) au moins un premier élément de délivrance (25, 26) d'un élément oblong continu (27, 28) en matériau élastomère cru, agencé audit deuxième emplacement de travail (B) en vue d'interagir fonctionnellement avec un desdits tambours auxiliaires (19, 20, 40) ;
b6) au moins un deuxième élément de délivrance (41) d'un élément oblong continu (42) en matériau élastomère cru agencé audit au moins un troisième emplacement de travail (C) en vue d'interagir fonctionnellement avec un desdits tambours auxiliaires (19, 20, 40) ;
c) au moins un dispositif de transfert (36) du manchon substantiellement cylindrique fabriqué dans le poste de finition (17), apte à interagir fonctionnellement avec un desdits tambours auxiliaires (19, 20, 40) audit emplacement de prélèvement (D), pour le transfert dudit manchon substantiellement cylindrique à un emplacement radialement extérieur par rapport à une structure de carcasse (3) construite dans le poste de construction (14).

30. Installation (1) selon la revendication 29 comprenant en outre au moins un dispositif de délivrance (24) de couches de ceinture, agencé audit premier emplacement de travail (A) en vue d'interagir fonctionnellement avec un desdits tambours auxiliaires (19, 20, 40).

31. Installation (1) selon l'une quelconque des revendications 29 ou 30, comprenant en outre au moins un dispositif de délivrance (22) d'élément (23) analogue à une bande de matériau élastomère cru comprenant au moins un câble de renforcement, agencé audit premier emplacement de travail (A) en vue d'interagir fonctionnellement avec un desdits tambours auxiliaires (19, 20, 40) pour former une couche de ceinture (12) comprenant des câbles de renforcement substantiellement parallèles à la direction circonférentielle de développement du manchon.

32. Installation (1) selon la revendication 29 comprenant au moins un dispositif supplémentaire de délivrance d'une couche de ceinture (13) dotée d'une pluralité de câbles de renforcement, agencé audit premier emplacement de travail (A) en vue d'interagir fonctionnellement avec un desdits tambours auxiliaires (19, 20, 40).

33. Installation (1) selon la revendication 29 comprenant en outre au moins un troisième élément de délivrance d'un troisième élément oblong continu respectif en matériau élastomère cru, agencé audit emplacement de prélèvement (D) en vue d'interagir fonctionnellement avec un desdits tambours auxiliaires (19, 20, 40).

34. Installation (1) selon l'une quelconque des revendications 29 ou 33, dans laquelle lesdits éléments de délivrance (25, 26, 41) d'éléments oblongs continus (27, 28, 42) comprennent au moins une extrudeuse (29, 30, 43).

35. Installation (1) selon l'une quelconque des revendications 29 ou 33, dans laquelle au moins un desdits éléments de délivrance (25, 26) d'éléments oblongs continus (27, 28) délivre ledit élément oblong continu sous forme de produit semi-fini en matériau élastomère cru, se présentant sous forme d'une bande continue.

36. Installation selon la revendication 29, dans laquelle le dispositif de déplacement (18) comprend au moins un ensemble (31, 32, 44) de mise en rotation de tambour apte à faire tourner les tambours auxiliaires (19, 20, 40) sur leurs axes géométriques.

37. Installation (1) selon la revendication 29, dans laquelle lesdits tambours auxiliaires (19, 20, 40) sont supportés de façon coulissante par ledit dispositif de déplacement (18).

38. Installation (1) selon l'une quelconque des revendications 29 ou 33, dans laquelle ledit appareil de déplacement (18) comprend au moins un ensemble (33, 34, 45) de déplacement en translation de tambour apte à exécuter des mouvement axiaux commandés desdits tambours auxiliaires (19, 20, 40) auxdits emplacements de travail (A, B, C), ou audit emplacement de prélèvement (D).

39. Installation (1) selon la revendication 29, dans laquelle ledit appareil de déplacement (18) est d'un type substantiellement analogue à un touret et est apte à supporter lesdits tambours auxiliaires (19, 20, 40) à des emplacements décalés angulairement les uns par rapport aux autres.

40. Installation (1) selon la revendication 39, comprenant en outre au moins un ensemble d'entraînement (35) apte à faire tourner ledit appareil de déplacement (18) sur un axe de rotation (Y-Y) substantiellement vertical.

41. Installation (1) selon la revendication 38, dans laquelle ledit ensemble de déplacement en translation de tambour (33, 34, 45) du dispositif de déplacement (18) déplace en translation lesdits tambours auxiliaires (19, 20, 40) entre lesdits emplacements de travail (A, B, C) ou ledit emplacement de prélèvement (D) et un emplacement d'attente défini entre lesdits emplacements de travail (A, B, C) ou l'emplacement de prélèvement (D) et un axe de rotation (Y-Y) de l'appareil de déplacement (18).

42. Installation (1) selon la revendication 29, comprenant en outre au moins deux éléments de délivrance (25, 26) d'éléments oblongs continus respectifs (27, 28) en matériau élastomère cru, disposés audit emplacement de travail (B) en vue d'interagir fonctionnellement sur des côtés opposés de l'un desdits tambours auxiliaires (19, 20, 40).

43. Installation (1) selon la revendication 29, comprenant en outre au moins deux éléments de délivrance d'éléments oblongs continus respectifs en matériau élastomère cru, disposés à au moins un troisième emplacement de travail (C) en vue d'interagir fonctionnellement sur des côtés opposés de l'un desdits tambours auxiliaires (19, 20, 40).

44. Installation (1) selon la revendication 29, dans laquelle l'emplacement de prélèvement (D) du manchon cylindrique coïncide substantiellement avec ledit premier emplacement de travail (A).

45. Installation (1) selon la revendication 29, comprenant en outre au moins un appareil destiné à mettre en forme ladite structure de carcasse (3) en lui donnant une forme substantiellement toroïdale de manière à associer le manchon substantiellement cylindrique comprenant la structure de ceinture (4) et la bande de roulement (5) à ladite structure de carcasse (3).

46. Installation destinée à la fabrication de pneumatiques pour roues de véhicules, comprenant une installation de fabrication (1) selon l'une quelconque des revendications 29 à 45, et au moins un poste de vulcanisation destiné à la vulcanisation des pneumatiques obtenus dans ladite installation de fabrication (1).
